# EUROPEAN PATENT APPLICATION

(11) **EP 4 823 149 A1**
(43) Date of publication of application: **14.10.2026**
(21) Application number: 24906550.9
(22) Date of filing: 20.12.2024
(51) Int. Cl.: H04W 24/02

(54) **COMMUNICATION METHOD AND APPARATUS**

(30) Priority: 22.12.2023 CN 202311788349
(71) Applicant: Huawei Technologies Co., Ltd., Shenzhen, Guangdong 518129 (CN)
(72) Inventor: XING, Weijun, Shenzhen, Guangdong 518129 (CN); YAO, Qi, Shenzhen, Guangdong 518129 (CN); WU, Shaoyun, Shenzhen, Guangdong 518129 (CN)
(74) Representative: Körber, Martin Hans
(86) International application number: PCT/CN2024/141042
(87) International publication number: WO 2025/131078

(57) **Abstract**

A communication method and a communication apparatus are disclosed. The method includes: A first network element obtains first configuration information, and sends the first configuration information. The first configuration information indicates a use rule of first signaling between a terminal device and a first network function, the first signaling is associated with a first service, and the first network function supports providing the first service for the terminal device. **In** the technical solutions of this application, the terminal device may obtain the first service by exchanging the first signaling with the first network function, so that flexible and lightweight deployment and update of network services can be provided.

## Description

This application claims priority to Chinese Patent Application No. 202311788349.1, filed with the China National Intellectual Property Administration on December 22, 2023, and entitled "COMMUNICATION METHOD AND COMMUNICATION APPARATUS", which is incorporated herein by reference in its entirety.

### TECHNICAL FIELD

Embodiments of this application relate to the field of communication technologies, and more specifically, to a communication method and a communication apparatus.

### BACKGROUND

A mobile network system establishes a transmission channel for a user, so that data packets of different services can be quickly and reliably transmitted between the user and a data network (data network, DN), providing ubiquitous access services for the user. With rapid development of communication technologies, a mobile network may further provide additional functions such as computing, sensing, and data processing.

In a 5th generation (5th generation, 5G) mobile communication network architecture, non-access stratum (Non-access stratum, NAS) signaling includes mobility management (Mobility Management, MM), session management (Session Management, SM), short message service (Short Message Service, SMS), UE policy (UE policy), location service (Location Service, LCS), and other signaling. Different NAS signaling corresponds to different services. When user equipment (user equipment, UE) performs NAS signaling interaction with a network function (network function, NF), signaling is forwarded by using an access and mobility management function (access and mobility management function, AMF), to meet user service requirements.

However, as the update and iteration frequency of network functions increases, the existing standardized implementation is not conducive to flexible deployment and update of network services.

### SUMMARY

This application provides a communication method and a communication apparatus, to provide flexible and lightweight deployment and update of network services.

According to a first aspect, a communication method is provided. The method may be performed by a first network element (for example, a NAS control function (NAS control function, NACF)), or may be performed by a chip, a circuit, or a logic module of the first network element. This is not limited in this application. For ease of description, the following provides descriptions by using an example in which the method is performed by the first network element.

The method includes: obtaining first configuration information, where the first configuration information indicates a use rule of first signaling between a terminal device and a first network function, the first signaling is associated with a first service, and the first network function supports providing the first service for the terminal device; and sending the first configuration information.

For example, the first signaling includes NAS signaling (or a NAS message) and/or control plane signaling.

For example, the first service may be a service provided by a current 5G network, for example, a protocol data unit (protocol data unit, PDU) session establishment/update service, a registration service, a location service, or an access service, or may be a new service that may be provided by a network, for example, a sensing service, a compute service, a data service, an artificial intelligence (artificial intelligence, AI) service, a cloud terminal service, a data compression service, an AI model training service, a data cache service, a format conversion service, or a virtual user service.

Based on the foregoing solution, the use rule of the first signaling is defined, and the first signaling is exposed to the terminal device as a service for use, so that the terminal device can exchange the first signaling with the first network function. In other words, the terminal device can flexibly use the first signaling to obtain the first service provided by the first network function, especially a plurality of new service types that may be provided by the network, for example, additional functions such as an AI service, a computational power service, or a sensing service. The network allows flexible definition and service orchestration of the first network function, to ensure that network functions and services in the network can be quickly implemented and applied, thereby ensuring user experience.

In some implementations, the first signaling is used to implement one or more of the following: controlling the first service; synchronizing a status of the first service; or transmitting data of the first service.

For example, that the first signaling is used to control the first service includes: The first signaling may be used to request the first service, request to change a parameter of the first service, request to release the first service, or the like. That the first signaling is used to synchronize the status of the first service includes: The first signaling may be used to activate the first service, suspend the first service, update a status of the terminal device, or the like. That the first signaling is used to transmit the data of the first service includes: The first signaling may be used to transmit data related to the first service, or the like.

Based on the foregoing solution, a function of the first signaling is defined, so that different service requests of a user can be satisfied, and user experience can be ensured.

In some implementations, the method further includes: receiving a first request message, where the first request message is used to request the first configuration information, and the first request message includes information about the first network function and/or information about the first service; and sending a first response message, where the first response message indicates a configuration result of the first configuration information.

Based on the foregoing solution, the first network function may generate or obtain the first configuration information based on the first request message of a service requester (for example, an operation, administration and maintenance (Operation Administration and Maintenance, OAM)/network control function (network control function, NCF)/task control function (task control function, TCF)/application function (application function, AF)), so that the terminal device can subsequently flexibly obtain the first service from the first network function through the first signaling, to implement definable transmission of the first signaling, and ensure that the network functions and the services in the network can be quickly implemented and applied, thereby improving user experience.

In some implementations, the method further includes: receiving a first request message, where the first request message is used to request the first configuration information, and the first request message includes information about the first network function and/or information about the first service; and sending the first configuration information includes: sending the first response message, where the first response message includes the first configuration information.

Based on the foregoing solution, the first network function may generate or obtain the first configuration information based on the first request message of the service requester (for example, the OAM/NCF/TCF/AF), and send the first configuration information to another node, so that the terminal device can subsequently flexibly exchange the first signaling with the first network function, and further obtain the first service from the first network function, to implement definable transmission of the first signaling, and ensure that the network functions and the services in the network can be quickly implemented and applied, thereby improving user experience.

In some implementations, sending the first configuration information includes: sending second information to a database, where the second information is used to store or update the first configuration information.

Based on the foregoing solution, the database may obtain the first configuration information by using first information. It is assumed that a network function (for example, a policy control function (policy control function, PCF) responsible for policy control of the terminal device, or an AMF responsible for mobility management of the terminal device) sends a subscription service update notification request to the database. In this case, after receiving the second information, the database may send the first configuration information to the network function. Alternatively, when the terminal device goes online or a policy of the terminal device is updated subsequently, the database may send second configuration information in the first configuration information to the terminal device by using the AMF/PCF. Alternatively, when the terminal device subsequently initiates a request for the first service through the first signaling, a forwarding node or a processing node in the network may obtain third configuration information in the first configuration information from the database, and further determine forwarding logic and the use rule of the first signaling, to ensure that the terminal device obtains the first service in time.

In some implementations, the first request message further includes one or more of the following: an identifier of the terminal device; a format of the first signaling; a service identifier associated with the first signaling; a service type associated with the first signaling; content of the first signaling; an identifier of the first signaling; the forwarding logic of the first signaling; a priority of the first signaling; or information about a service requester allowed to use the first signaling and/or information about an application allowed to use the first signaling.

In some implementations, before obtaining the first configuration information, the method further includes: determining, based on the first information, that the terminal device supports using the first service, where the first information includes one or more of the following: capability information of the terminal device, where the capability information of the terminal device indicates that the terminal device supports obtaining the first service through the first signaling, and/or indicates that the terminal device supports obtaining the first service through the first signaling; the identifier of the terminal device, where the identifier of the terminal device is associated with capability information of the terminal device; subscription information of the terminal device, where the subscription information indicates that a network authorizes the terminal device to use the first service, and/or indicates that the network authorizes the terminal device to obtain the first service through the first signaling; or policy information, where the policy information indicates that the terminal device is allowed to use the first service, and/or indicates that the terminal device is allowed to obtain the first service through the first signaling.

Based on the foregoing solution, before obtaining the first configuration information, the first network element may first determine whether the terminal device supports using the first service, and obtain and send the first configuration information when determining that the terminal device supports using the first service, so that the terminal device can flexibly obtain the first service from the first network function through the first signaling.

In some implementations, the first configuration information includes the second configuration information and the third configuration information, and sending the first configuration information includes: sending the second configuration information to the terminal device; and/or sending the third configuration information to the first network function.

It should be understood that the terminal device may send a service request message based on the second configuration information, to obtain the first service, and the first network function may determine, based on the third configuration information, whether to provide the first service, that is, determine the use rule of the first signaling by using the first configuration information, so that the terminal device and the first network function can flexibly use the first signaling and obtain the first service, to ensure that the network functions and the services in the network can be quickly implemented and applied, thereby ensuring user experience.

In some implementations, the second configuration information includes one or more of the following: the format of the first signaling; the content of the first signaling; a priority of the first service; a name of the first signaling; the identifier of the first signaling; or another parameter associated with the first service.

In some implementations, the third configuration information includes one or more of the following: an identifier of the first service; information about an application allowed to use the first service and/or information about a service requester allowed to use the first service; the forwarding logic of the first signaling; the identifier of the first signaling; or network information, where the terminal device is allowed to use the first service in a network indicated by the network information.

In some implementations, the method further includes: sending indication information to the terminal device, where the indication information indicates the terminal device to obtain the second configuration information and/or fourth configuration information through a first session, and the fourth configuration information indicates information for the terminal device to perform software update.

Based on the foregoing solution, the indication information is sent, so that the terminal device can determine that the second configuration information and/or the fourth configuration information need/needs to be obtained based on the first session, that is, the use rule of the first signaling and/or the software update information need/needs to be obtained, and can further flexibly send the first signaling to the first network function and obtain the first service based on the obtained second configuration information and/or fourth configuration information, to ensure that the network functions and the services in the network can be quickly implemented and applied, thereby ensuring user experience.

In some implementations, sending the second configuration information to the terminal device includes: sending policy update information to the terminal device, where the policy update information includes the second configuration information; or receiving a second request message from a user plane network element, where the second request message is used to request to obtain the second configuration information; and sending a second response message to the user plane network element, where the second response message includes the second configuration information.

Based on the foregoing solution, the second configuration information is carried in the policy update information, or the second configuration information is sent to the terminal device as the policy update information, that is, the second configuration information is sent to the terminal device in a policy update manner, so that the terminal device and the first network function can flexibly use the first signaling and obtain the first service, to ensure that the network functions and the services in the network can be quickly implemented and applied, thereby ensuring user experience.

In some implementations, the method further includes: receiving a third request message from the user plane network element, where the third request message is used to request to obtain the fourth configuration information; and sending a third response message to the user plane network element, where the third response message includes the fourth configuration information. The fourth configuration information indicates the information for the terminal device to perform software update.

The third request message may carry one or more of the following: information about a first application, the identifier of the first service, the identifier of the first signaling, the identifier of the terminal device, or an identifier and/or address information of the first network element.

Based on the foregoing solution, the user plane network element initiates a request through a session, and the first network element feeds back the fourth configuration information to the user plane network element based on the received third request message, so that the terminal device subsequently completes software upgrade or update to obtain the second configuration information.

According to a second aspect, a communication method is provided. The method may be performed by a second network element (for example, an NCF, a TCF, or an OAM), or may be performed by a chip, a circuit, or a logic module of the second network element. This is not limited in this application. For ease of description, the following provides descriptions by using an example in which the method is performed by the second network element.

The method includes: sending a first request message, where the first request message is used to request first configuration information, the first request message includes information about a first network function and/or information about a first service, the first configuration information indicates a use rule of first signaling between a terminal device and the first network function, the first signaling is associated with the first service, and the first network function supports providing the first service for the terminal device; and receiving a first response message, where the first response message indicates a configuration result of the first configuration information; and/or the first response message includes the first configuration information.

Based on the foregoing solution, as a control plane function network element, the second network element may trigger sending of the first request message to the first network element, so that the first network element configures the first configuration information. In other words, the second network element or another network element (for example, a processing node or a forwarding node) may obtain the use rule of the first signaling from the first network element, to support invoking of the first service, and ensure that the terminal device can flexibly obtain the first service from the first network function through the first signaling, especially a plurality of service types that may be provided by a network, for example, additional functions such as an AI service, a computational power service, or a sensing service, to ensure that network functions and services in the network can be quickly implemented and applied, thereby ensuring user experience.

In some implementations, before sending the first request message, the method further includes: deploying the first network function in the network.

In some implementations, deploying the first network function in the network includes: receiving a fourth request message, where the fourth request message is used by an application function or an operator management function to request to deploy the first network function in the network; and sending a fourth response message, where the fourth response message indicates a deployment result of the first network function.

In some implementations, the first response message includes the first configuration information, and the method further includes: sending third information to a database, where the third information is used to store or update the first configuration information.

In some implementations, the first configuration information includes second configuration information and third configuration information, and the method further includes: sending the second configuration information to the terminal device; and/or sending the third configuration information to the first network function.

In some implementations, the second configuration information includes one or more of the following: a format of the first signaling; content of the first signaling; a priority of the first service; a name of the first signaling; or another parameter associated with the first service.

In some implementations, the third configuration information includes one or more of the following: an identifier of the first service; information about an application allowed to use the first service and/or information about a service requester allowed to use the first service; forwarding logic of the first signaling; an identifier of the first signaling; or network information, where the terminal device is allowed to use the first service in a network indicated by the network information.

In some implementations, the method further includes: sending indication information to the terminal device, where the indication information indicates the terminal device to obtain the second configuration information and/or fourth configuration information through a first session, and the fourth configuration information indicates information for the terminal device to perform software update.

In some implementations, the method further includes: sending policy update information to the terminal device, where the policy update information includes the second configuration information; or receiving a second request message from a user plane network element, where the second request message is used to request to obtain the second configuration information; and sending a second response message to the user plane network element, where the second response message includes the second configuration information.

In some implementations, the method further includes: receiving a third request message from the user plane network element, where the third request message is used to request to obtain the fourth configuration information; and sending a third response message to the user plane network element, where the third response message includes the fourth configuration information.

In some implementations, the first request message further includes one or more of the following: an identifier of the terminal device; a format of the first signaling; a service identifier associated with the first signaling; a service type associated with the first signaling; the content of the first signaling; the identifier of the first signaling; the forwarding logic of the first signaling; a priority of the first signaling; or information about a service requester allowed to use the first signaling and/or information about an application allowed to use the first signaling.

For beneficial effects of the second aspect and some implementations of the second aspect, correspondingly refer to the related descriptions of the first aspect. Details are not described herein again.

According to a third aspect, a communication method is provided. The method may be performed by a terminal device, or may be performed by a chip, a circuit, or a logic module of the terminal device. This is not limited in this application. For ease of description, the following provides descriptions by using an example in which the method is performed by the terminal device.

The method includes: receiving second configuration information, where the second configuration information indicates a use rule of first signaling between the terminal device and a first network function, the first signaling is associated with a first service, and the first network function supports providing the first service for the terminal device; and sending the first signaling based on the second configuration information, where the first signaling is used by the terminal device to obtain the first service.

Based on the foregoing solution, the terminal device may determine the use rule of the first signaling by receiving the second configuration information, so that the terminal device can flexibly perform signaling interaction with the first network function through the first signaling, to obtain the first service, especially a plurality of service types that may be provided by a network, for example, additional functions such as an AI service, a computational power service, or a sensing service, to ensure that network functions and services in the network can be quickly implemented and applied, thereby ensuring user experience.

In some implementations, before receiving the second configuration information, the method further includes: sending capability information, where the capability information indicates that the terminal device supports obtaining the first service through the first signaling based on the second configuration information.

In some implementations, the capability information further indicates that the terminal device supports exposing the first signaling to a first application for use.

In other words, the terminal device may flexibly process the first signaling based on the obtained second configuration information, and/or flexibly encapsulate content of the first signaling based on the second configuration information. In addition, that the terminal device supports exposing the first signaling to the first application for use indicates that after obtaining the capability information, a first network element may determine, based on information about the first application provided by the terminal device, that the first application can use a signaling service of the first service. The capability information is flexibly defined to extend a function of the first signaling. To be specific, the terminal device is supported in obtaining the first service by sending the first signaling, and the first application is also supported in using the first signaling, or the first application is supported in transmitting the first signaling, or the first application is supported in transmitting a data packet of the first service through the first signaling, so that the first service can be flexibly obtained through the first signaling.

In some implementations, the second configuration information includes one or more of the following: a format of the first signaling; content of the first signaling; a priority of the first service; a name of the first signaling; an identifier of the first signaling; or another parameter associated with a first NAS service.

In some implementations, the method further includes: receiving indication information, where the indication information indicates the terminal device to obtain the second configuration information and/or fourth configuration information through a first session, and the second configuration information indicates information for the terminal device to perform software update.

In some implementations, the method further includes: obtaining a session parameter, where the session parameter is used to establish the first session; sending a session establishment request message based on the session parameter, where the session establishment request message is used to request to establish the first session; and receiving a session establishment response message, where the session establishment response message indicates an establishment result of the first session.

In some implementations, receiving the second configuration information includes: sending a fifth request message to a user plane network element through the first session, where the fifth request message is used to request to obtain the second configuration information and/or the fourth configuration information; and receiving a fifth response message from the user plane network element through the first session, where the fifth response message includes the second configuration information and/or the fourth configuration information.

In some implementations, the method further includes: obtaining first node information, where the first node information indicates a sending node of the second configuration information; sending a sixth request message to a user plane network element through the first session, where the sixth request message is used to request to obtain the second configuration information and/or the fourth configuration information, and the sixth request message includes the first node information; and receiving a sixth response message from the user plane network element through the first session, where the sixth response message includes the second configuration information and/or the fourth configuration information.

In some implementations, the sixth request message further includes information about the first service.

In some implementations, receiving the second configuration information includes: receiving policy update information, where the policy update information includes the second configuration information.

For beneficial effects of the third aspect and some implementations of the third aspect, correspondingly refer to the related descriptions of the first aspect. Details are not described herein again.

According to a fourth aspect, a communication method is provided. The method may be performed by a forwarding node (for example, a radio access node, an AMF, or an SCP), or may be performed by a chip, a circuit, or a logic module of the forwarding node. This is not limited in this application. For ease of description, the following provides descriptions by using an example in which the method is performed by the forwarding node.

The method includes: receiving first signaling, where the first signaling is used by a terminal device to obtain a first service; obtaining forwarding logic of the first signaling, where the forwarding logic of the first signaling includes information about a first network function, and the first network function supports processing the first signaling; and sending the first signaling to the first network function based on the forwarding logic of the first signaling.

A quantity of network functions (which may be referred to as processing nodes) that process the first service is not limited in this application. Optionally, if there are a plurality of processing nodes, the forwarding logic of the first signaling further includes information about a second network function, and the second network function supports processing the first signaling. For example, if the first network function executes a first part of the first service, and the second network function executes a second part of the first service, after the forwarding node forwards the first signaling to the first network function, the first network function executes the first part of the first service, and then the second network function executes the second part of the first service.

In some implementations, obtaining the forwarding logic of the first signaling includes: receiving the forwarding logic of the first signaling from a first network element, where the first network element supports the first service.

In some implementations, obtaining the forwarding logic of the first signaling includes: sending a query message to a network repository function, where the query message is used to obtain information about the first network function.

According to a fifth aspect, a communication apparatus is provided. The communication apparatus may be used in a first network element, and may include modules or units that are in a one-to-one correspondence with the methods/operations/steps/actions described in the first aspect. The module or unit may be implemented by a hardware circuit, software, or a combination of a hardware circuit and software.

In some implementations, the apparatus includes: a processing unit, configured to obtain first configuration information, where the first configuration information indicates a use rule of first signaling between a terminal device and a first network function, the first signaling is associated with a first service, and the first network function supports providing the first service for the terminal device; and a transceiver unit, configured to send the first configuration information.

The transceiver unit may perform receiving and sending processing in the first aspect and the possible implementations of the first aspect, and the processing unit may perform processing other than the receiving and sending processing in the first aspect and the possible implementations of the first aspect.

According to a sixth aspect, a communication apparatus is provided. The communication apparatus may be used in a second network element, and may include modules or units that are in a one-to-one correspondence with the methods/operations/steps/actions described in the second aspect. The module or unit may be implemented by a hardware circuit, software, or a combination of a hardware circuit and software.

In some implementations of the sixth aspect, the apparatus includes: a transceiver unit, configured to send a first request message, where the first request message is used to request first configuration information, the first request message includes information about a first network function and/or information about a first service, the first configuration information indicates a use rule of first signaling between a terminal device and the first network function, the first signaling is associated with the first service, and the first network function supports providing the first service for the terminal device. The transceiver unit is further configured to receive a first response message, where the first response message indicates a configuration result of the first configuration information; and/or the first response message includes the first configuration information.

The transceiver unit may perform receiving and sending processing in the second aspect and the possible implementations of the second aspect. Optionally, the apparatus further includes a processing unit, and the processing unit may perform processing other than the receiving and sending processing in the second aspect and the possible implementations of the second aspect.

According to a seventh aspect, a communication apparatus is provided. The communication apparatus may be used in a terminal device, and may include modules or units that are in a one-to-one correspondence with the methods/operations/steps/actions described in the third aspect. The module or unit may be implemented by a hardware circuit, software, or a combination of a hardware circuit and software.

In some implementations of the seventh aspect, the apparatus includes: a transceiver unit, configured to receive second configuration information, where the second configuration information indicates a use rule of first signaling between the terminal device and a first network function, the first signaling is associated with a first service, and the first network function supports providing the first service for the terminal device. The transceiver unit is further configured to send the first signaling based on the second configuration information, where the first signaling is used by the terminal device to obtain the first service.

The transceiver unit may perform receiving and sending processing in the third aspect and the possible implementations of the third aspect. Optionally, the apparatus further includes a processing unit, and the processing unit may perform processing other than the receiving and sending processing in the third aspect and the possible implementations of the third aspect.

According to an eighth aspect, a communication apparatus is provided. The communication apparatus may be used in a terminal device, and may include modules or units that are in a one-to-one correspondence with the methods/operations/steps/actions described in the third aspect. The module or unit may be implemented by a hardware circuit, software, or a combination of a hardware circuit and software.

In some implementations of the eighth aspect, the apparatus includes: a transceiver unit, configured to receive first signaling, where the first signaling is used by a terminal device to obtain a first service; and a processing unit, configured to obtain forwarding logic of the first signaling, where the forwarding logic of the first signaling includes information about a first network function, and the first network function supports processing the first signaling. The transceiver unit is further configured to send the first signaling to the first network function based on the forwarding logic of the first signaling.

The transceiver unit may perform receiving and sending processing in the fourth aspect and the possible implementations of the fourth aspect. Optionally, the apparatus further includes a processing unit, and the processing unit may perform processing other than the receiving and sending processing in the fourth aspect and the possible implementations of the fourth aspect.

According to a ninth aspect, a communication apparatus is provided, including at least one processor. The at least one processor is configured to execute a computer program or instructions, and/or use a logic circuit, to enable the communication apparatus to perform the method in any one of the first aspect to the fourth aspect or any one of the possible implementations of these aspects.

In some implementations, the at least one processor is coupled to at least one memory, and the at least one memory stores the computer program or the instructions. Optionally, the communication apparatus further includes the at least one memory. Optionally, the at least one processor and the at least one memory are integrated together.

According to a tenth aspect, a chip is provided, including a processor and a communication interface. The communication interface is configured to: receive to-be-processed information and/or data, and send the to-be-processed information and/or data to the processor. The processor is configured to process the to-be-processed information and/or data, so that a communication apparatus in which the chip is mounted performs the method in any one of the first aspect to the fourth aspect or any one of the possible implementations of these aspects.

According to an eleventh aspect, a computer-readable storage medium is provided. The computer-readable storage medium stores computer instructions. When the computer instructions are run on a computer, the method in any one of the first aspect to the fourth aspect or any one of the possible implementations of these aspects is implemented.

According to a twelfth aspect, a computer program product is provided. The computer program product includes computer program code. When the computer program code is run on a computer, the method in any one of the first aspect to the fourth aspect or any one of the possible implementations of these aspects is implemented.

According to a thirteenth aspect, a wireless communication system is provided, including the communication apparatus in any one or more of the fifth aspect, the sixth aspect, or the eighth aspect.

Optionally, the communication system may further include the communication apparatus in the seventh aspect.

For technical effects of the technical solutions in the fifth aspect to the thirteenth aspect, refer to the descriptions of the corresponding technical effects of the first aspect to the fourth aspect. Details are not described.

### BRIEF DESCRIPTION OF DRAWINGS

FIG. 1 is a diagram of a network architecture to which an embodiment of this application is applicable;
FIG. 2 is a schematic interaction flowchart of a first communication method according to an embodiment of this application;
FIG. 3 is a schematic interaction flowchart of a second communication method according to an embodiment of this application;
FIG. 4 is a schematic interaction flowchart of a third communication method according to an embodiment of this application;
FIG. 5 is a schematic interaction flowchart of a fourth communication method according to an embodiment of this application;
FIG. 6 is a schematic interaction flowchart of a fifth communication method according to an embodiment of this application;
FIG. 7A and FIG. 7B are diagrams of a protocol stack according to an embodiment of this application;
FIG. 8 is a diagram of a first communication apparatus according to an embodiment of this application; and
FIG. 9 is a diagram of a second communication apparatus according to an embodiment of this application.

### DESCRIPTION OF EMBODIMENTS

The following describes technical solutions in this application with reference to accompanying drawings.

The technical solutions provided in this application may be applied to various communication systems, for example, a 4th generation (4th generation, 4G) communication system like a long term evolution (long term evolution, LTE) communication system, a 5G communication system like 5G new radio (new radio, NR) or a 5G core network (5G Core, 5GC), or various communication systems evolved after 5G, such as a 6th generation (6th generation, 6G) communication system. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a part operated by an operator may be referred to as a public land mobile network (public land mobile network, PLMN), which may also be referred to as an operator network or the like. The PLMN is a network established and operated for the purpose of providing a land mobile communication service for the public, and is mainly a public network that a mobile network operator (mobile network operator, MNO) provides a mobile broadband access service for users. The PLMN described in embodiments of this application may be specifically a network that satisfies a 3GPP standard requirement, which is briefly referred to as a 3GPP network. The 3GPP network usually includes but is not limited to a 5G mobile communication network, a 4G mobile communication network, and another communication system that is evolved after 5G, like a 6G mobile communication network.

For ease of description, the PLMN or the 5G network is used as an example for description in embodiments of this application.

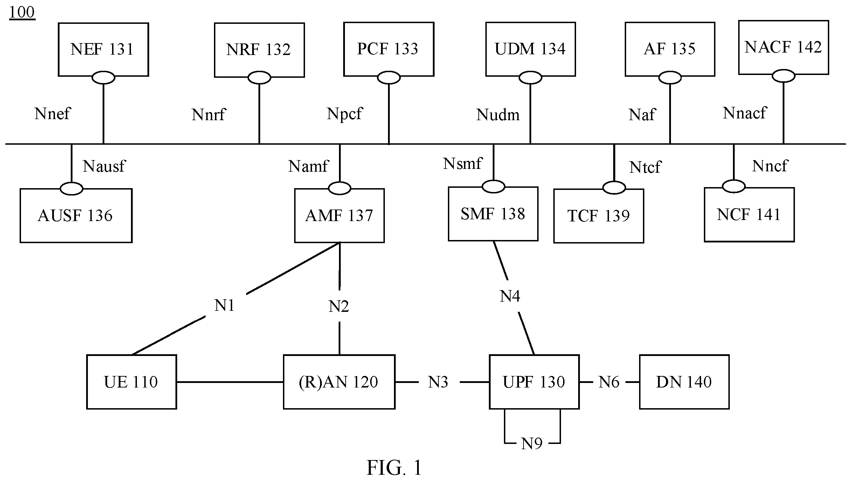

FIG. 1 is a diagram of a network architecture 100 to which an embodiment of this application is applicable. A 5G network architecture of a service-based architecture (service-based architecture, SBA) in a nonroaming scenario defined in a 3GPP standardization process is used as an example. As shown in FIG. 1, the network architecture may include a terminal device part, a data network (data network, DN) part, and an operator network PLMN part. The operator network PLMN part may include but is not limited to a (radio) access network ((radio) access network, (R)AN) 120 and a core network (core network, CN) part.

The following briefly describes functions of network elements of each part.

The terminal device part may include UE 110. The UE 110 in this application is a device having wireless sending and receiving functions, and may communicate with one or more core network (core network, CN) devices by using an access network device (or may be referred to as an access device) in the (radio) access network (R)AN 120. The UE 110 may also be referred to as user equipment (user equipment, UE), an access terminal, a terminal, a subscriber unit, a subscriber station, a mobile console, a mobile station (mobile station, MS), a mobile terminal (mobile terminal, MT), a remote station, a remote terminal, a mobile device, a user terminal, a user agent, a user apparatus, or the like. The terminal device 110 may alternatively be a device configured to provide voice and/or data connectivity for a user, or may be an internet-of-things device. Alternatively, the UE 110 includes a handheld device having a wireless communication function, a compute device, another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. Currently, the UE 110 may be a mobile phone, a tablet computer, a notebook computer, a palmtop computer, a mobile internet device (mobile internet device, MID), a wearable device (for example, a smart watch, a smart band, a pedometer, or smart glasses), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The UE 110 may alternatively be a vehicle apparatus, for example, an entire vehicle apparatus, a vehicle-mounted module, a vehicle-mounted chip, an on board unit (on board unit, OBU), or an internet of vehicles telematics box (telematics box, T-BOX). The UE 110 may alternatively be another device having a terminal function. For example, the UE 110 may alternatively be a device that functions as a terminal in D2D communication. A type or a category of the terminal device is not limited in embodiments of this application. The UE 110 may be deployed on land, including an indoor or outdoor device, or a handheld or vehicle-mounted device, may be deployed on a water surface (for example, on a ship), or may be deployed in the air (for example, on an airplane, a balloon, or a satellite).

The (R)AN 120 may include one or more access network elements or access network devices (which may also be referred to as network devices). In other words, the network device is a node in the (R)AN 120, and may also be referred to as a RAN node (or device). An interface between the access network device and the terminal device may be a Uu interface (or referred to as an air interface, that is, a message exchanged between the access network device and the terminal device may be referred to as an air interface message). Certainly, in future communication, names of these interfaces may remain unchanged, or may be replaced with other names. This is not limited in this application. The (R)AN 120 is a device that provides a wireless communication function for the UE 110, and may connect the terminal device to a node or a device in a wireless network. The network architecture 100 may include one or more (R)ANs 120. The plurality of (R)ANs 120 may be nodes of a same type, or may be nodes of different types. The (R)AN 120 may be considered as a subnet of the operator network, and is an implementation system between a service node in the operator network and the UE 110. For example, the UE 110 may be connected to the service node of the operator network via the (R)AN 120, to obtain a service provided by the service node.

In a possible scenario, the (R)AN 120 includes but is not limited to: a next-generation node base station (next-generation node base station, gNB) in a 5G system, an evolved NodeB (evolved NodeB, eNodeB) in long term evolution (long term evolution, LTE), a home base station (for example, a home evolved NodeB or a home NodeB, HNB), a baseband unit (baseband unit, BBU), a transmission point (transmitting and receiving point, TRP), a transmitting point (transmitting point, TP), a small cell device, a mobile switching center, a next-generation base station in a 6G mobile communication system, a base station in a future mobile communication system, a satellite, an access point (access point, AP) in a Wi-Fi system, an integrated access and backhaul (integrated access and backhaul, IAB) node, or a network device in a mobile switching center non-terrestrial network (non-terrestrial network, NTN) communication system, that is, may be deployed on a high-altitude platform or a satellite. In this case, the satellite may support a function of the (R)AN 120. In addition, the (R)AN 120 may alternatively be deployed on land, for example, outdoors; or may be deployed on water, for example, on a ship. The (R)AN 120 may be a macro base station, a micro base station, an indoor base station, a relay node, or a donor node, or may be a radio controller in a cloud radio access network (cloud radio access network, CRAN) scenario. The (R)AN 120 may alternatively be a device that functions as a base station in device-to-device (device-to-device, D2D) communication, internet-of-vehicles communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of (R)ANs 120 collaborate to assist the terminal in implementing radio access, and different (R)ANs 120 separately implement a part of functions of the base station. For example, the (R)AN 120 may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a BBU. The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the (R)AN 120 may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may alternatively have different names, but a person skilled in the art may understand meanings of the names. For example, the radio access network may alternatively be of an open radio access network (open radio access network, ORAN) architecture. In an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

The CN part may include but is not limited to the following network functions NFs: a user plane function (user plane function, UPF) 130, a network exposure function (network exposure function, NEF) 131, a network function repository function (network function repository function, NRF) 132, a policy control function PCF 133, a unified data management (unified data management, UDM) function 134, an application function AF 135, an authentication server function (authentication server function, AUSF) 136, an access and mobility management function AMF 137, and a session management function (session management function, SMF) 138.

A data network DN 140 may also be referred to as a packet data network (packet data network, PDN), and is usually a network located outside the operator network, for example, a third-party network.

The following further briefly describes functions of the NFs included in the CN.
1. The UPF 130 is a user plane function provided by an operator, and is a user plane function for communication between the operator network and the DN 140. The UPF network function 130 includes user planerelated functions such as data packet routing and transmission, data packet inspection, traffic usage reporting, quality of service (quality of service, QoS) handling, uplink data packet detection, and downlink data packet storage.
2. The NEF 131 is a control plane function provided by the operator, mainly enables a third party to use a service provided by the network, and supports exposure of capabilities, events, and data analytics by the network, secure provision of information from an external application to the PLMN, translation of internal-external information of the PLMN, and the like.
3. The NRF 132 is a control plane function provided by the operator, and may be configured to maintain real-time information of a network function and a service in the network.
4. The PCF 133 is a control plane function provided by the operator, mainly supports provision of a unified policy framework to control network behavior and provision of policy rules for control plane network functions, and is responsible for obtaining user subscription information related to policy decisions. For example, the PCF 133 may be divided into two PCFs with different functions: a UE-PCF and an SM-PCF.
5. The UDM 134 is a control plane function provided by the operator, and is responsible for storing information such as a subscriber permanent identifier (subscriber permanent identifier, SUPI), a generic public subscriber identifier (generic public subscriber identifier, GPSI), and a credential (credential) of a subscriber in the operator network. The SUPI is first encrypted during transmission, and an encrypted SUPI is referred to as a subscription concealed identifier (subscription concealed identifier, SUCI). The information stored in the UDM network function 134 may be used for authentication and authorization for accessing the operator network by the UE 110. The subscriber in the operator network may be specifically a subscriber who uses a service provided by the operator network. The credential of the subscriber may be a long-term key stored in a subscriber identity module card of a mobile phone, or a stored small file, for example, information related to encryption of a subscriber identity module card of a mobile phone, and is used for authentication and/or authorization. It should be noted that for ease of description, information such as the permanent identifier, the credential, a security context, authentication data, and a token related to verification/authentication and authorization is not distinguished or limited in embodiments of this application.
6. The AF 135 is a control plane function provided by the operator, and mainly interacts with other NFs in the PLMN to provide corresponding services such as provision of visited network selection information for roaming UE, traffic routing guidance, and access to the NEF 131.
7. The AUSF 136 is a control plane function provided by the operator, and is usually used for primary authentication, namely, authentication between the UE 110 (a subscriber) and the operator network.
8. The AMF 137 is a control plane network function provided by the operator network, and is responsible for access control and mobility management when the UE 110 accesses the operator network, for example, including functions such as mobility status management, allocation of a temporary user identity, and user authentication and authorization.
9. The SMF 138 is a control plane network function provided by the operator network, and is responsible for managing a PDU session of the UE 110 (including session establishment, modification, and release), and is used for user plane function selection and reselection, internet protocol (internet protocol, IP) address allocation of the terminal device, QoS control, or the like. The PDU session is a channel for transmitting a PDU, and the terminal device and the DN 140 transmit the PDU to each other through the PDU session. The SMF 138 is responsible for establishment, maintenance, deletion, and the like of the PDU session. The SMF 138 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.

It may be understood that the foregoing network elements or NFs may be physical entities in a hardware device, software instances running on dedicated hardware, or virtualized functions instantiated on a sharing platform (for example, a cloud platform). In short, an NF may be implemented by hardware or software. In addition, there may be one or more pieces of hardware (or software) for implementing all functions of an NF.

It should be understood that the AMF, the SMF, the UPF, the NEF, the AUSF, the NRF, the PCF, and the UDM shown in FIG. 1 may be understood as network elements configured to implement different functions in a core network. These network elements may be combined into a network slice as required, and may be independent devices, or may be integrated into a same device to implement different functions. Specific forms of the network elements are not limited in this application.

It should be further understood that the foregoing names are defined merely for distinguishing between different functions, and should not constitute any limitation on this application. This application does not exclude a possibility that another name is used in the 5G network and another future network. For example, in the 6G network, the terms in 5G may still be used for a part or all of the network elements, or other names may be used.

It should be further understood that Nnef, Nnrf, Npcf, Nudm, Nausf, Namf, Nsmf, Naf, N1, N2, N3, N4, N6, and N9 in FIG. 1 are interface serial numbers. For example, for meanings of the interface serial numbers, refer to meanings defined in the 3GPP standard protocol. The meanings of the interface serial numbers are not limited in this application. In addition, interface names between the network functions in FIG. 1 are merely examples. In a specific implementation, an interface name of a system architecture may be alternatively another name. This is not limited in this application.

Currently, a mobile network may provide a connection service. It is standardized that when UE performs NAS signaling interaction with an NF, an AMF needs to be used for forwarding, to satisfy a service requirement of a user. With development of communication technologies, additional services such as computing, sensing, and data processing may be further provided. However, updating the NAS signaling in an existing standardized manner is not conducive to updating and deployment of the additional services because a standardization periodicity is generally long and content of NAS signaling corresponding to the additional services may not be standardized. For example, AI-based semantic interpretation of a text or a voice, conversion of a text or voice request of a user into a networkreadable service request by using an AI technology, or the like may not be defined in a unified standardized format.

To resolve the foregoing technical problem, in this application, a task control function, a network control function, and a NAS control function are first added based on a current network architecture. Details are shown in FIG. 1.

The following separately briefly describes new network functions (or network elements).
1. A task control function TCF 139 may be a control plane function provided by an operator. As a control anchor of a task, the TCF may perform orchestration control on an NF service after receiving a service request from an external network element or an internal operator management plane, that is, flexibly orchestrate an execution order of different NF services and network resource control required by the task, so that the NF supports requesting a first service through first signaling (for example, NAS signaling and/or control signaling). For example, the TCF may schedule and combine services such as connection, computing, data, and algorithm related to the first service, to implement a corresponding task (for example, model training or sensing).
2. A network control function NCF 141 may be a control plane function provided by the operator. The NCF may perform NF deployment, activation, capability update, or the like based on a request from an external network element or an operator management network element, so that the NF supports a service requested through NAS signaling.
3. A NAS control function NACF 142 may be a control plane function provided by the operator, and mainly provided services include but are not limited to: generating or obtaining NAS configuration information (namely, first configuration information in this application) based on a configuration request from an external network element or an internal network element, and delivering the NAS configuration information to a terminal device or another network element, to support the another network element in invoking a service.

It should be understood that names of the new network elements are defined merely for ease of distinguishing between different functions, and should not constitute any limitation on this application. This application does not exclude a possibility that another name is used in another network. For example, the NAS control function means that the NAS signaling is exposed to the terminal device, an application server, or a network device (or a network element) as a service for use, and may also be referred to as a signaling service control function or the like in the future. In this case, "NAS configuration information" may also be referred to as "signaling service configuration information" or the like. A name thereof is not limited in this application.

Based on the foregoing new network elements, this application provides a communication method and a communication apparatus, to provide flexible and lightweight deployment and update of network services, and satisfy a service requirement of a user.

In this application, a network function may be understood as a network element configured to implement different functions in a network. Therefore, unless otherwise specified, the network function and the network element may be replaced with each other. It should be noted that, in embodiments of this application, a first network element may represent an NACF, a second network element may represent an OAM, an NCF, or a TCF, and a first network function represents a processing node for executing a first service. Optionally, a quantity of processing nodes is not limited in this application. For example, the processing node further includes a second network function.

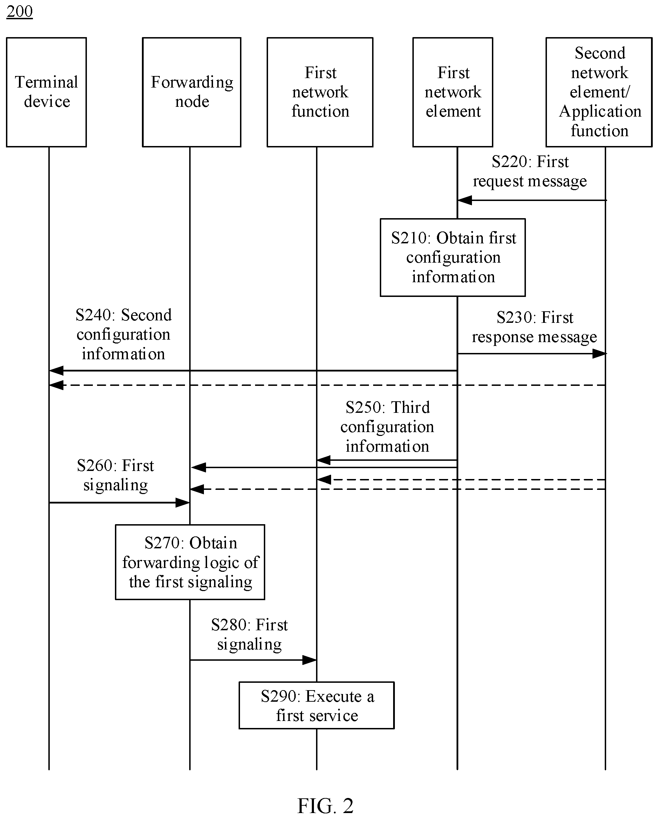

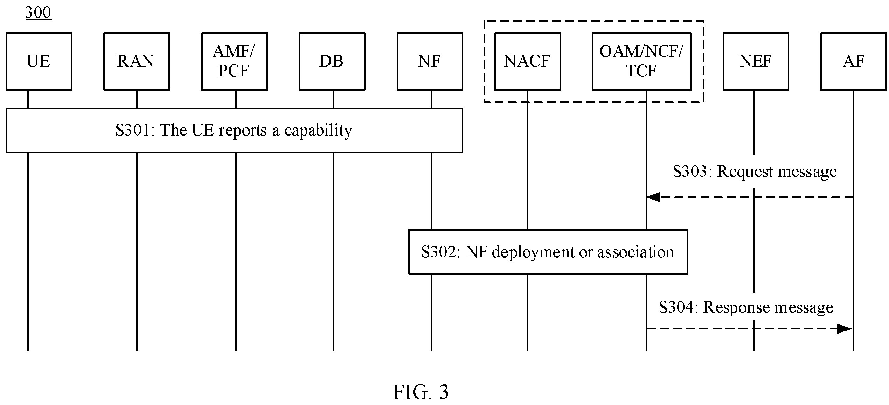

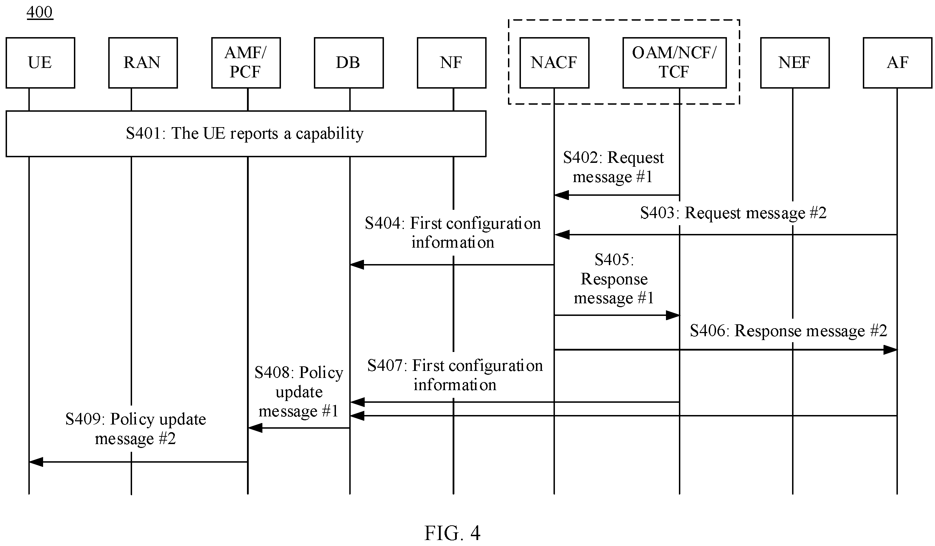

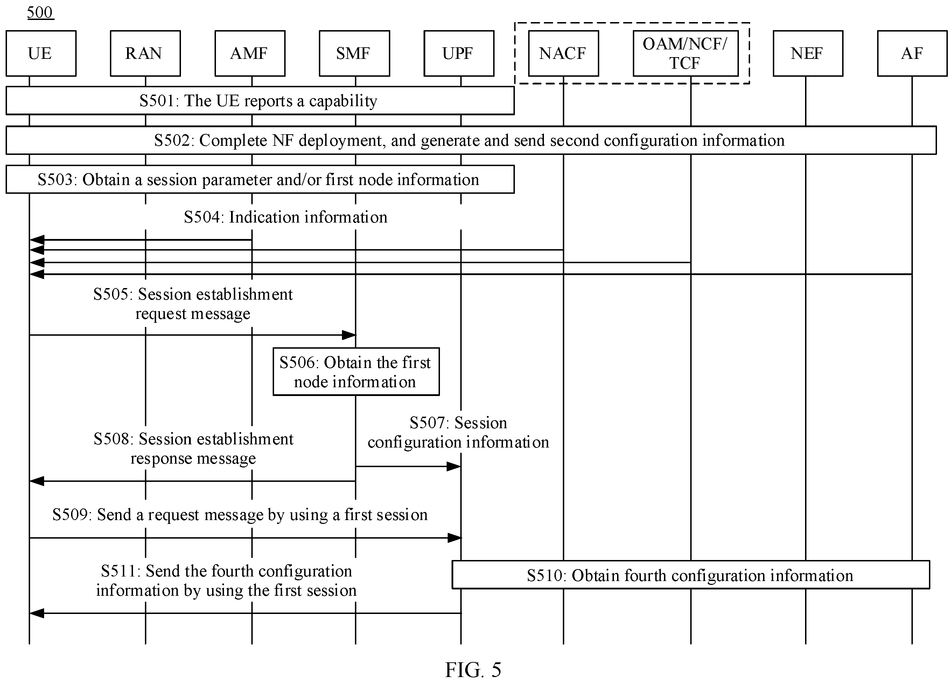

With reference to the accompanying drawings, the following describes in detail a communication method provided in embodiments of this application. Embodiments provided in this application are applicable to any communication scenario in which a transmit-end device communicates with a receive-end device, for example, may be applied to the communication system shown in FIG. 1. This application provides methods shown in FIG. 2 to FIG. 5 below. It should be understood that method embodiments shown in FIG. 2 to FIG. 5 may be combined with each other, and steps in the method embodiments shown in FIG. 2 to FIG. 5 may be mutually referenced. In embodiments of this application, the method embodiments shown in FIG. 3 to FIG. 5 may be considered as possible implementations for implementing functions of the method embodiment shown in FIG. 2. FIG. 3 mainly describes an example of a manner of generating and sending NAS configuration information. FIG. 4 mainly describes sending NAS configuration information through a session, and performing software upgrade or installation and use by a terminal device. FIG. 5 mainly describes forwarding logic for identifying and obtaining a NAS service by a forwarding node.

FIG. 2 is a schematic flowchart of a communication method 200 according to an embodiment of this application. As shown in FIG. 2, the method procedure may be performed by a first network element (for example, the NACF shown in FIG. 1), a second network element (for example, the OAM, or the NCF or the TCF shown in FIG. 1), a terminal device (for example, the UE shown in FIG. 1), and a forwarding node (for example, a service communication proxy (Service Communication Proxy, SCP) or the RAN or the AMF shown in FIG. 1), or may be performed by modules and/or components (for example, chips or integrated circuits) that have corresponding functions and that are mounted in the first network element, the second network element, and the terminal device. This is not limited in this application. For ease of description, the following uses the first network element, the second network element, and the terminal device as execution bodies for description. The method includes the following plurality of steps.

S210: The first network element obtains first configuration information.

The first configuration information indicates a use rule of first signaling between the terminal device and a first network function, the first signaling is associated with a first service, and the first network function supports providing the first service for the terminal device.

For example, the first signaling may be NAS signaling (or a NAS message) and/or control plane signaling.

In this application, the first service may be a service provided by a current 5G network, for example, a protocol data unit PDU session establishment/update service, a registration service, a location service, or an access service, or may be a new service that may be provided by a network, for example, a sensing service, a compute service, a data service, an artificial intelligence AI service, a cloud terminal service, a data compression service, an AI model training service, a data cache service, a format conversion service, or a virtual user service. Optionally, the first service in this application may be referred to as a network service, a network function service, or a NAS service, and may be represented by an NF Service or a Service.

It should be noted that, for ease of description, in this application, the first network function is used as a processing node for executing the first service. Optionally, one or more forwarding nodes configured to forward the first signaling may be included between the terminal device and the first network function. Optionally, the network function (namely, the processing node) that provides the first service for the terminal device may further include a second network function. A quantity of processing nodes for executing the first service is not limited in this application.

Optionally, the first network function may support one or more first services. This is not limited in this application. In addition, the first service may alternatively be provided by one or more network functions. For example, the first network function supports a first part of the first service, and the second network function supports a second part of the first service. In other words, the first network function and the second network function serve as processing nodes of the first service to jointly provide the first service.

In this application, the first configuration information includes one or more of the following:

### (1) Information about the first service

For example, the information about the first service includes at least one of the following: an identifier or a name (for example, a Service ID/name) of the first service, address information (for example, an IP address or a MAC (Media Access Control) address) of the first service, a full qualified domain name (full qualified domain name, FQDN) of the first service, or an application programming interface (application programming interface, API). For example, when the first service is a PDU session establishment/update service, the information about the first service may be a PDU session establishment/modification service; or when the first service is a registration service, the information about the first service may be a registration service.

### (2) Information about an application (application, app) that supports using the first service and/or information about a service requester that supports using the first service

For example, the information about the application includes an app ID and/or an app address, the service requester may be a terminal device, a third-party application server AF, a network function NF, another network element, or the like, and the information about the service requester may include at least one of the following: an identifier of the service requester (for example, an NF ID, a UE ID, or an AF ID), an address of the service requester (for example, an NF address), a type of the service requester (for example, an NF type), or the like.

### (3) Forwarding logic of the first signaling

For example, the forwarding logic of the first signaling includes at least one of the following: routing information (or transmission path information) of the first signaling, or information about the first network function (for example, an identifier or a name (for example, an NF ID/name) of the first network function, address information of the first network function, or a type (for example, an NF type) of the first network function).

Optionally, if there are a plurality of processing nodes for executing the first service, the forwarding logic of the first signaling further includes information about the second network function (for example, an identifier or a name (for example, an NF ID/name) of the second network function, address information of the second network function, or a type (for example, an NF type) of the second network function). For example, it is assumed that the network function for processing the first service includes a first network function NF 1 and a second network function NF 2. In other words, the NF 1 and the NF 2 jointly provide the first service for the terminal device. In this case, the forwarding logic of the first signaling may be that the forwarding node first forwards the first signaling to the NF 1. After executing (the first part of) the first service, the NF 1 forwards the first signaling to the NF 2, and the NF 2 executes (the second part of) the first service.

(4) Network information: The terminal device is allowed to use the first service in a network indicated by the network information, or the terminal device may use the first service after accessing the network indicated by the network information.

For example, the network information may include at least one of the following: a Network ID, a PLMN ID, a slice identifier, a subnet identifier, a non-public network (non-public network, NPN) identifier, or the like.

### (5) Format of the first signaling

For example, the format of the first signaling may be a packet structure or a protocol layer design. The format of the first signaling indicates how to present content of the first signaling, for example, a parameter carried in a service request message. For example, the parameter carried in the service request message is sent in a form of character string in a specific format.

### (6) Content of the first signaling

For example, the content of the first signaling may include a service request message name and/or a specific parameter. The service request message name indicates that the terminal device requests the network function to provide the first service, and the specific parameter indicates a parameter used by the network function to provide the first service for the terminal device.

For example, if the first signaling is used to request a first service Service 1, the first signaling may be a Service_1_request message (Parameter 1, Parameter 2, ...), where the service request message name is Service_1_request message, and the specific parameter is (Parameter 1, Parameter 2, ...).

In an implementation, the format of the first signaling and the content of the first signaling may be generated by the first network element (for example, the NACF) based on information provided by a service requester, and/or the specific parameter may be provided by the AF, the OAM, the TCF, or the NCF.

When a plurality of network functions (for example, the first network function NF 1 and the second network function NF 2) are involved in processing the first service requested by the terminal device, a plurality of layers of first signaling may need to be constructed. For example, if the Service 1 needs to be sequentially processed by the NF 1 and the NF 2, the first signaling needs to carry a service request message name and a specific parameter of the NF 1, and a service request message name and a specific parameter of the NF 2. In addition, if an invoking order between the NF 1 and the NF 2 is involved, the invoking order may be optionally carried in the first signaling. For example, the service request message name and the specific parameter of the NF 2 may be included in a message of the NF 1, namely, NF1_Service request message (Parameter 1, {NF2_Service request message (Parameter 2)}). This means that after processing the NF1_Service request message, the NF 1 sends the NF2_Service request message (Parameter 2) to the NF 2, and the NF 2 continues to execute the first service.

Optionally, the content of the first signaling and/or the format of the first signaling may be placed in a container or an information body, and forwarded by the first network element.

### (7) Priority of the first service

It should be noted that there may be a correspondence between a priority level and a priority value. For example, a higher priority level corresponds to a lower priority value, or a lower priority level corresponds to a lower priority value. In an example in which a higher priority level corresponds to a lower priority value, the priority value may be an integer ranging from 1 to 8 or an integer ranging from 0 to 7. If the priority value ranges from 1 to 8, a priority value 1 indicates a highest-level priority. For example, it is assumed that the priority of the first service is higher than a priority of another service, a priority value corresponding to the first service may be 1, and a priority value corresponding to the another service may be 3.

The following briefly describes the first signaling and the first service, and a priority of the first signaling and the priority of the first service.

In an example, the first signaling is used only for the first service. To be specific, the terminal device sends the first signaling only to obtain the first service. In this case, the priority of the first signaling (or a transmission priority (transmission priority) of the first signaling) is equivalent to the priority of the first service.

In another example, the first signaling may be used for a plurality of services, and the plurality of services include the first service. In this case, the terminal device may request to obtain the plurality of services by sending the first signaling, and priorities corresponding to the plurality of services may be different. Alternatively, different terminal devices request different services, and when the first signaling is invoked at the same time, a priority of invoking the first signaling by the terminal device may be determined based on priorities of the different services. In this case, it may be understood that the priority of the first signaling is the priority of the first service carried by the first signaling. In other words, when a plurality of services need to be transmitted through the first signaling, a priority of a service determines a priority of sending the first signaling. For example, a priority of a computational power service is higher than a priority of a sensing service. When the terminal device requests to obtain the computational power service and the sensing service through the first signaling, the terminal device may first send the first signaling to request to obtain the computational power service, then send the first signaling to request to obtain the sensing service, and the like.

### (8) Name of the first signaling

For example, the name of the first signaling may include the following implementations:
(a) a specific NAS name, for example, XX NAS, where the NAS name (for example, XX NAS) may be used as a name of the first signaling or a name of a NAS container;
(b) a specific information element (information element, IE), where the IE may be carried in the first signaling;
(c) a specific flag bit, for example, a segment of characters in a header that carries the first signaling; and
(d) an identifier of the first signaling, for example, a NAS ID or a NAS Session ID.

### (9) Another parameter associated with the first service

For example, the another parameter may include at least one of the following: geographical location information for using the first service, time window information for using the first service, radio access technology (radio access technology, RAT) interface information for using the first service, a QoS parameter required for using the first service, or the like.

### (10) Routing information (Routing Information)

For example, the routing information includes a routing layer identifier (for example, a NAS routing layer ID), and indicates an identifier, address information, and/or the like of a processing node (for example, the first network function and/or the second network function). For example, for the first service, the first network function may execute the first part of the first service after receiving the first signaling, and continue to forward the first signaling to the second network function based on the routing information, so that the second network function continues to execute the second part of the first service. In other words, the first network function and the second network function jointly provide the first service for the terminal device.

In this application, the routing information may be used to determine the forwarding logic of the first signaling. For a specific implementation, refer to the following related descriptions. Details are not described herein.

It should be understood that the use rule or method of the first signaling may be determined based on at least one of the foregoing parameters (1) to (10). For example, if the first configuration information includes the identifier (for example, an AI Service ID) of the first service, it indicates that the terminal device may request an AI service from the first network function through the first signaling. For another example, if the first configuration information includes the identifier (for example, an AI Service ID) of the first service and network information (for example, a PLMN ID), it indicates that the terminal device can request an AI service from the first network function through the first signaling only when the terminal device accesses the PLMN.

In this application, that the first signaling is associated with the first service may be understood as follows: The first signaling is used by the terminal device to obtain the first service, or the first service may be obtained through the first signaling. The first signaling may be used to implement one or more of the following:

### (1) Control the first service.

For example, controlling the first service through the first signaling includes: requesting the first service, requesting to change a parameter of the first service, requesting to release the first service, or the like through the first signaling.

### (2) Synchronize a status of the first service.

For example, synchronizing the status of the first service through the first signaling includes: activating the first service, suspending the first service, updating a status of the terminal device, or the like through the first signaling.

### (3) Transmit data of the first service.

For example, the data related to the first service is transmitted through the first signaling.

The following describes an example in which the first network element obtains the first configuration information in step S210.

In an example, the first network element generates the first configuration information.

In another implementation, another network element generates the first configuration information, and sends the first configuration information to the first network element. Optionally, the first network element sends a request message to the another network element, to request to obtain the first configuration information. For example, the another network element may be an OAM, an AF, or a PCF. For example, the OAM sends the first configuration information to the first network element by using a management plane function, the PCF carries the first configuration information in policy information or configures the first configuration information as a policy for the first network element, and the AF provides, for the first network element, information about an app that supports using the first service in the first configuration information, for example, an app ID and/or app address information.

In an implementation, before step S210 is performed, the method further includes: The first network element determines whether the terminal device supports the first service, and/or the first network element determines whether the terminal device supports obtaining the first service through the first signaling. It should be understood that this application is performed based on that the terminal device supports the first service, and/or the terminal device supports obtaining the first service through the first signaling. To be specific, the first network element generates or obtains the first configuration information only when the first network element determines that the terminal device supports the first service, and/or determines that the terminal device supports obtaining the first service through the first signaling. If the first network element determines that the terminal device does not support the first service, or determines that the terminal device does not support obtaining the first service through the first signaling, the first network element may refuse to perform step S210.

In an example, the first network element determines, based on first information, that the terminal device supports the first service, and/or the first network element determines, based on the first information, that the terminal device supports obtaining the first service through the first signaling.

For example, the first information includes one or more of the following:

### (1) Capability information of the terminal device

For example, the capability information of the terminal device indicates that the terminal device supports the first service, and/or the capability information of the terminal device indicates that the terminal device supports obtaining the first service through the first signaling. Optionally, the capability information of the terminal device may be actively reported by the terminal device, or may be obtained by the first network element by querying a database (data base, DB) or a UDM.

### (2) Identifier of the terminal device

For example, the identifier of the terminal device is associated with the capability information of the terminal device. The first network element may determine the capability information of the terminal device based on the identifier of the terminal device, and further determine that the terminal device supports the first service, and/or determine that the terminal device supports obtaining the first service through the first signaling.

### (3) Subscription information of the terminal device

For example, the subscription information indicates that a network authorizes the terminal device to use the first service, and/or the subscription information indicates that the network authorizes the terminal device to obtain the first service through the first signaling. Optionally, the first network element may obtain the subscription information from the UDM or a unified data repository (Unified Data Repository, UDR).

### (4) Policy information

For example, the policy information indicates that the terminal device is allowed to use the first service, and/or the policy information indicates that the terminal device is allowed to obtain the first service through the first signaling. Optionally, the first network element may obtain the policy information from the PCF.

In other words, the first network element may determine, based on one or more of the capability information of the terminal device, the identifier of the terminal device, the subscription information of the terminal device, or the policy information, that the terminal device supports the first service, and/or determine that the terminal device supports obtaining the first service through the first signaling.

In an implementation, before step S210 is performed, the method further includes step S220.

S220: The second network element or an application function sends a first request message to the first network element, and correspondingly, the first network element or the application function receives the first request message from the second network element. The first request message is used to request the first configuration information.

For example, the first request message includes information about the first network function and/or information about the first service. For specific definitions, refer to the foregoing related descriptions.

Optionally, the first request message further includes one or more of the following:
(1) Identifier of the terminal device, for example, a UE ID/name, a subscription permanent identifier (subscription Permanent Identifier, SUPI), or a generic public subscription identifier (Generic Public Subscription Identifier, GPSI)
(2) Format of the first signaling
(3) Content of the first signaling
(4) Forwarding logic of the first signaling
(5) Priority of the first signaling
(6) Information about a service request method allowed to use the first signaling and/or information about an application allowed to use the first signaling
(7) First information, for example, including at least one of the capability information of the terminal device, the subscription information of the terminal device, or the policy information
(8) Identifier of the first signaling
   For example, the identifier of the first signaling may be a NAS ID, a NAS Session ID, or the like, and may be generated by a service requester (for example, UE or an NF), or may be generated by the first network element.
(9) Service identifier associated with the first signaling

For example, the service identifier associated with the first signaling may be a Service ID/name, and may be generated by the service requester (for example, the UE or the NF). In this application, a service associated with the first signaling may be the first service.

It should be understood that the NAS ID or the NAS Session ID is used to identify the first signaling, and the Service ID/name is used to identify the first service that uses the first signaling. For example, the terminal device may transmit a control message and/or data of the AI Service_1 by using the NAS Service ID_1.

### (10) Service type associated with the first signaling

For example, the service type associated with the first signaling may be a connection service, a sensing service, an AI service, or the like.

For specific definitions of the parameters (2) to (7), refer to the foregoing related descriptions.

S230: The first network element sends a first response message to the second network element or the application function, and correspondingly, the second network element or the application function receives the response message from the first network element.

The first response message indicates a configuration result of the first configuration information, for example, a configuration success or a configuration failure.

It should be understood that the technical solutions of this application are performed when the first configuration information is successfully configured. Optionally, if the first configuration information fails to be configured, the first response message may carry a failure cause value, to indicate that the first configuration information fails to be configured.

In an implementation, before step S220 is performed, the method further includes: The second network element deploys the first network function (namely, the processing node) in the network, so that the first network function supports the first service. If the network function that supports the first service further includes the second network function, the second network element also needs to deploy the second network function in the network.

In a first example, the second network element receives a fourth request message from the application function or an operator management function, where the fourth request message is used to request to deploy the first network function in the network. Correspondingly, the second network element sends a fourth response message to the application function or the operator management function, where the fourth response message indicates a deployment result of the first network function, for example, a deployment success or a deployment failure. It should be understood that the technical solutions of this application are performed based on a deployment success of the first network function. Optionally, if the first network function fails to be deployed, the fourth response message may carry a cause value to indicate that the first network function fails to be deployed, for example, the first network function is overloaded and cannot support the first service, or the first network function does not have a capability of providing the first service, or a network connection fails.

In a second example, the operator management function (for example, the OAM) independently triggers deployment of the first network function in the network.

The following describes an example in which the second network element deploys the first network function in the network.

For example, the second network element adds the first network function in the network. For example, an operator management plane may initiate a network function deployment request to the second network element (for example, the NCF), to support some additional features (namely, the first service). The NCF deploys a related network function in the network, for example, adds the first network function. The first network function supports providing the first service for the terminal device. For another example, an operator management plane may deploy a network function in the network, that is, add the first network function that supports the first service.

For example, the second network element updates the first network function in the network. For example, the operator management plane may initiate a deployment request for the first network function to the second network element (for example, the NCF), and the NCF updates the first network function in the network. For another example, the operator management plane may update the first network function in the network, so that the first network function supports some additional features, that is, the first network function is allowed to provide the first service, provide differentiated dedicated services based on different users, and the like. For another example, the application function or the operator management function initiates an AI service or task execution request to the second network element (for example, the TCF). When executing the AI service or task, the TCF may invoke a connection-related NF, a computing-related NF, a data-related NF, and the like for collaborative execution, to implement the AI service or task (for example, model training or sensing). Therefore, different first signaling may need to be transmitted for different AI services or tasks.

For example, an external network element (for example, the AF) may request the second network element to deploy an AF image in the network. For example, the AF may directly initiate a request for image deployment or a customized function to the second network element (for example, the NCF or the OAM), or the AF may initiate a request for image deployment or a customized function to the second network element by using the NEF. In this implementation, the network provides a first service exposure function for an external third-party application, for example, allows the AF to deploy an image or a customized network function in the network, so that the terminal device can perform signaling interaction with the AF image or customized function in the network. In other words, interaction between the terminal device and the AF is completed in a core network without using a DN connection, thereby reducing a data forwarding and processing delay.

In an implementation, after step S210 is performed, the method further includes: The first network element sends the first configuration information. For example, the first network element may send the first configuration information to a forwarding node (for example, a RAN, an AMF, or an SCP, configured to forward the first signaling between the terminal device and the first network function), the application function AF, the second network element, the database DB, or the like.

For example, if the first configuration information includes second configuration information and third configuration information, the first network element may send the second configuration information to the terminal device, and send the third configuration information to the processing node (for example, the first network function and/or the second network function).

For example, the second configuration information includes one or more of the following: the format of the first signaling, the content of the first signaling, the priority of the first service, the name of the first signaling, the identifier of the first signaling, or another parameter associated with the first service. For specific definitions, refer to related descriptions of step S210.

For another example, the third configuration information includes one or more of the following: the information about the first service, the information about the application allowed to use the first service and/or the information about the service requester allowed to use the first service, the forwarding logic of the first signaling, the network information, the identifier of the first signaling, or the routing information. For specific definitions, refer to related descriptions of step S210.

In a first example, the first network element may send the first configuration information to the application function and/or the second network element, where the first configuration information may be carried in the first response message in step S230.

Optionally, the application function and/or the second network element may store the first configuration information in the DB. For example, the application function and/or the second network element sends third information to the DB, to store or update the first configuration information. Alternatively, the application function and/or the second network element may send the second configuration information to the terminal device as policy update information of the terminal device through the PCF. Alternatively, the application function and/or the second network element may send the second configuration information to the terminal device through another NF like the AMF. Alternatively, the application function and/or the second network element may send the second configuration information to the terminal device through a base station. Optionally, the application function and/or the second network element may send the third configuration information to the forwarding node and/or the processing node.

In a second example, the first network element may send second information to the database DB, to store or update the first configuration information, where the second information includes the first configuration information. It is assumed that the NF (for example, the PCF responsible for policy control of the terminal device, or the AMF responsible for mobility management of the terminal device) sends a subscription service update notification request to the DB, the DB sends the first configuration information to the NF. When the terminal device goes online or a policy of the terminal device is updated subsequently, the DB may send the second configuration information to the terminal device through the AMF/PCF. Alternatively, when the terminal device subsequently initiates a request for the first service through the first signaling, the forwarding node or the processing node in the network may obtain the second configuration information from the DB, to determine the forwarding logic and the use rule of the first signaling.

In a third example, the first network element may send the second configuration information to the terminal device. For details, refer to the following step S240.

S240: The first network element sends the second configuration information to the terminal device, and correspondingly, the terminal device receives the second configuration information from the first network element.

In a first example, the first network element may send the second configuration information to the database DB and/or the second network element, the DB and/or the second network element sends the second configuration information to the AMF/PCF/RAN in a policy update message (for example, a UE policy), and then the AMF/PCF/RAN forwards the second configuration information to the terminal device.

In a second example, the first network element may forward the second configuration information to the terminal device through the AMF/PCF/RAN. For example, the first network element sends policy update information to the terminal device through the AMF/PCF/RAN, where the policy update information includes the second configuration information.

In a third example, the terminal device sends a fifth request message (corresponding to a newly established first session below) or a sixth request message (corresponding to an existing session) to a user plane network element through a first session, to request to obtain the second configuration information. Then, the user plane network element sends a second request message to the first network element or the second network element. Correspondingly, the first network element or the second network element sends a second response message to the user plane network element, where the second response message includes the second configuration information. Then, the user plane network element sends the second configuration information to the terminal device through the first session.

It should be noted that, that the first session is associated with the first service or the first session corresponds to the first service in this embodiment of this application may be understood as follows: The terminal device obtains the second configuration information through the user plane network element through the first session, then determines the format of the first signaling and/or the content of the first signaling based on the second configuration information, and may subsequently send the first signaling to obtain the first service. Optionally, if a session already exists between the terminal device and the user plane network element, the terminal device may alternatively send, through the existing session, a request for obtaining the second configuration information to the user plane network element. Herein, there may be no association relationship between the existing session and the first service. In other words, the terminal device may obtain the second configuration information through a newly established first session that has a binding relationship with the first service, or may obtain the second configuration information through another existing session. This is not limited in this application.

In a fourth example, the first network element may send the third configuration information to the processing nodes (for example, the first network function and the second network function) and/or the forwarding node (for example, the RAN, the AMF, or the SCP). For a specific implementation in which the first network element sends the third configuration information to the first network function, refer to the following step S250.

S250: The first network element sends the third configuration information to the first network function and/or the forwarding node, and correspondingly, the first network function and/or the forwarding node receives the third configuration information from the first network element.

Optionally, if the method 200 does not include the forwarding node, in other words, the first signaling does not need to be forwarded by the forwarding node in a process in which the terminal device sends the first signaling to request to obtain the first service, in other words, the terminal device may directly send the first signaling to the first network function, the first network element may not perform step S250 of sending the third configuration information to the forwarding node.

Optionally, if the method 200 includes the forwarding node, in other words, the first signaling needs to be forwarded by the forwarding node in a process in which the terminal device sends the first signaling to request to obtain the first service, the first network element sends the third configuration information to the processing node and the forwarding node. In this case, if the first network element sends the third configuration information only to the first network function, the forwarding node may request to obtain the third configuration information from the first network element, the database DB, the second network element (for example, the NCF, the TCF, or the OAM), or the application function. If the first network element sends the third configuration information only to the forwarding node, the first network function may request to obtain the third configuration information from the first network element, the database DB, the second network element (for example, the NCF, the TCF, or the OAM), or the application function. In other words, in this case, both the processing node and the forwarding node obtain the third configuration information, to ensure transmission of the first signaling and timely obtaining of the first service by the terminal device.

Optionally, before the first network element sends the third configuration information to the processing node and/or the forwarding node, the processing node and/or the forwarding node may send a configuration information request to the first network element, to obtain the third configuration information. In other words, the first network element may independently send the third configuration information to the processing node and/or the forwarding node, or may request to send the third configuration information to the processing node and/or the forwarding node based on the configuration information request.

It should be noted that an execution order of steps S240 and S250 is not limited in this application.

In an implementation, before the terminal device obtains the second configuration information, the method further includes: The terminal device reports the capability information.

For example, the terminal device may report the capability information to the network by carrying the capability information in a registration request message, a service request message, or another message. This is not limited in this application. For example, the terminal device sends a registration request message to the AMF, and carries the capability information in the registration request message. The AMF queries the UDM for the subscription information of the terminal device, and determines that the terminal device has a capability of obtaining the first service through the first signaling. In this case, the AMF may record the capability information of the terminal device in a context of the terminal device. In addition, the AMF may also send authorization information of the first service to the RAN, so that the RAN may forward, for the terminal device, the first signaling used to request the first service. Optionally, the terminal device may send the capability information to any one or more of the RAN, the SMF, the PCF, the DB, the NF, the first network element, or the second network element. This is not limited in this application.

For example, the capability information indicates that the terminal device supports obtaining the first service based on the second configuration information through the first signaling, that is, the terminal device may request to obtain the first service through the first signaling. It should be understood that the first service herein indicates that the terminal device may flexibly process the first signaling based on the second configuration information (for example, mark the first signaling by using a specific NAS header, or mark the first signaling by using a specific signaling identifier), and/or flexibly encapsulate the content of the first signaling based on the second configuration information. For example, a network side may expose a NAS service of the terminal device for an AI service. For example, the terminal device may carry AI semantic data in the first signaling, and then an AI semantic parsing function on the network side escapes the content in the first signaling, and provides the AI service for the terminal device.

For example, the capability information further indicates that the terminal device supports exposing the first signaling to a first application (for example, an app) for use, and may be considered as a second service supported by the terminal device. In other words, the second service may be understood as: transmitting the first signaling, or transmitting a data packet of the first service through the first signaling. Optionally, the terminal device sends information about the first application, for example, an app ID and/or an app address, to the network side. The network side may determine, based on the information about the first application provided by the terminal device, that the first application can use a signaling service of the first service.

In an implementation, the method further includes: The network side delivers indication information through a control plane, to indicate the terminal device to obtain the second configuration information and/or fourth configuration information through the first session.

For example, the terminal device may receive indication information from the first network element, the second network element, the application function AF, or the AMF. The indication information indicates the terminal device to obtain the second configuration information and/or the fourth configuration information through the first session, where the fourth configuration information indicates information for the terminal device to perform software update or chip upgrade.

Software update information may be information used by the terminal device to update software or download software, for example, an app ID or app address information. It may be understood that, if the terminal device can obtain the second configuration information only after software update (or software installation) or chip upgrade, in other words, the terminal device can request to obtain the first service through the first signaling only after software update (or software installation) or chip upgrade, the terminal device needs to obtain the fourth configuration information, and complete software upgrade or chip upgrade based on the fourth configuration information, to obtain the second configuration information by using upgraded or updated software. In this case, the software update or chip upgrade may be considered as a part of obtaining the second configuration information by the terminal device. In other words, before obtaining the second configuration information, the terminal device obtains the fourth configuration information, and completes the software update or chip upgrade based on the fourth configuration information.

Optionally, the indication information may be carried in the policy update message sent to the terminal device in step S240.

In a first example, the first session may be a session newly established by the terminal device based on a session parameter corresponding to a second configuration parameter. The session parameter includes at least one of the following: slice information, a session type, or a data network name (data network name, DNN), and the session parameter is used to establish the first session.

For example, the terminal device obtains the session parameter, and sends a session establishment request message to the SMF based on the session parameter, where the session establishment request message is used to request to establish the first session. Correspondingly, the SMF sends session configuration information to the UPF, where the session configuration information carries first node information (for example, information about the first network element, the second network element, or the application function), and the first node information indicates a node that delivers the second configuration information and/or the fourth configuration information. Correspondingly, the UPF may establish the first session with the terminal device based on the session configuration information. The SMF sends a session establishment response message to the terminal device, where the session establishment response message indicates an establishment result of the first session, for example, an establishment success or an establishment failure. It should be understood that, in this implementation, the second configuration information is obtained based on successful establishment of the first session.

Optionally, the session parameter may be obtained by the terminal device from the network side after the terminal device reports the capability information. For example, the terminal device may obtain the session parameter from the SMF. Optionally, any one or more of the AMF, the RAN, the PCF, the DB, the NF, the first network element, or the second network element may also obtain the session parameter from the AMF, and then send the session parameter to the terminal device. This is not limited in this application.

Optionally, the SMF may determine the first node information based on the session parameter provided by the terminal device. For example, the SMF may provide the session parameter to the PCF, and the PCF sends the first node information to the SMF; or the SMF may obtain the first node information by querying the NRF.

Based on this implementation, the terminal device may send the fifth request message to the user plane network element through the first session, to request to obtain the fourth configuration information. Then, the user plane network element sends a third request message to a first node (for example, the first network element, the second network element, or the application function), to request to obtain the fourth configuration information. Correspondingly, the first node sends a third response message to the user plane network element, where the third response message includes the fourth configuration information. Then, the user plane network element may send the fourth configuration information to the terminal device through the first session.

For example, the third request message or the fifth request message may carry one or more of the following: the information about the first application (for example, an app ID and/or app address information), the information about the first service, the identifier of the first signaling, the identifier of the terminal device, an identifier and/or address information of the first network element, or the like. For specific definitions, refer to the foregoing related descriptions.

In a second example, the first session may be an existing general session.

For example, the terminal device obtains the first node information, where the first node information indicates a sending node (for example, the application function, the second network element, or the first network element) of the second configuration information and/or the fourth configuration information, and then sends the sixth request message to the user plane network element through the first session, where the sixth request message is used to request to obtain the second configuration information and/or the fourth configuration information, and the sixth request message includes the first node information. Optionally, the sixth request message may further include the information about the first service. Correspondingly, the user plane network element obtains the second configuration information and/or the fourth configuration information from the first node, and sends a sixth response message to the terminal device through the first session, where the sixth response message includes the second configuration information and/or the fourth configuration information.

In an implementation, the first node information may be obtained by the terminal device from the network side after the terminal device reports the capability information. For example, the terminal device may obtain the first node information from any one or more of the SMF, the AMF, the RAN, the PCF, the DB, the NF, the first network element, the second network element, or the application function network element. This is not limited in this application. By determining the first node information, the terminal device may subsequently send a request message to the first node to obtain the second configuration information and/or the fourth configuration information.

Based on the foregoing steps S210 to S250, the terminal device may request the first service from the first network function through the first signaling, that is, perform the following steps S260 to S290.

S260: The terminal device sends the first signaling to the forwarding node based on the second configuration information.

The forwarding node may be the RAN, the AMF, or another network element. This is not limited in this application.

For example, when the second configuration information includes the app ID, it indicates that the app may use the first signaling. For example, the app may generate a data packet, and then send the data packet to a lower layer (for example, an IP layer or another function layer). The lower layer may encapsulate the data packet based on the second configuration information, for example, encapsulate the data packet into a payload of the first signaling, where a header carries a specific identifier (for example, the NAS ID in the second configuration information, or a specific NAS type, like the NAS Service ID or the app ID). Then, the terminal device sends the first signaling to the network side. Optionally, if the NAS type of the first signaling can be determined based on the header of the first signaling, the first signaling may not carry the NAS Service ID, the app ID, or the like. By performing specific processing or packaging on the first signaling, a subsequent forwarding node and/or processing node can accurately learn that the first signaling is used to obtain the first service, and then forward and process the first signaling in a targeted manner, so that the terminal device can obtain the first service in time. User service experience can be improved by flexibly using the first signaling.

In an implementation, if the first signaling is used by a service in the network, the first signaling may not be triggered by the app, but may be triggered by the terminal device. For example, there is an application scenario in which a user may initiate a service request to the network side in a form of text or voice. For example, the user may enter text or voice information through the terminal device, and the terminal device encapsulates the text or voice information as a payload of the first signaling, where a packet header may carry an AI identifier, and sends the packet to the network side through first signaling.

In an implementation, for enhancement of an existing network service (for example, a session establishment service), additional parameters may be added to a session request message, to support providing an additional service (for example, a computational power service). It should be understood that these additional parameters may not be completed through standardization. For example, the terminal device can encapsulate and send the first signaling after performing the software update or chip upgrade.

S270: The forwarding node obtains the forwarding logic of the first signaling.

For example, the forwarding logic of the first signaling includes the information about the first network function, and the first network function supports processing the first signaling. It should be noted that a quantity of processing nodes for executing the first service is not limited in this application. For example, if there are a plurality of nodes for executing the first service, the forwarding logic of the first signaling further includes the information about the second network function. In other words, the second network function and the first network function jointly provide the first service for the terminal device. For example, the first network function supports the first part of the first service, and the second network function supports the second part of the first service.

In an example, the forwarding node may send a query message to a network repository function (for example, the NRF, the DB, the UDM, or the UDR), to obtain the forwarding logic of the first signaling.

In another example, after performing step S210, the first network element may actively send the forwarding logic of the first signaling to the forwarding node.

In still another example, the forwarding node may send a message to the first network element, to request to obtain the forwarding logic of the first signaling. Correspondingly, the first network element sends the forwarding logic of the first signaling to the forwarding node.

For example, if the forwarding logic of the first signaling is carried in the third configuration information, the forwarding node may obtain the forwarding logic of the first signaling by obtaining the third configuration information. For an implementation in which the forwarding node obtains the third configuration information, refer to related descriptions of step S250.

It should be noted that an execution order of steps S260 and S270 is not limited in this application.

S280: The forwarding node sends the first signaling to the first network function based on the forwarding logic of the first signaling.

For example, after obtaining the forwarding logic of the first signaling, the forwarding node may maintain a mapping relationship between the identifier (for example, the NAS ID or the NAS Session ID) of the first signaling and the information (for example, an NF 1 ID or address information of the NF 1) about the first network function. For example, when receiving a message (namely, the first signaling) whose identifier is the NAS ID from the terminal device (or a previous forwarding node), the forwarding node may determine a corresponding first network function based on the mapping relationship and the NAS ID, and then forward the first signaling to the first network function.

Optionally, the mapping relationship may be predefined or preconfigured by the network for the forwarding node, or the mapping relationship may be configured by a network device for the forwarding node through signaling. Optionally, the mapping relationship may exist in a form of table, formula, character, text, or the like. This is not limited in this application.

It should be noted that, if there is one network function (processing node) for executing the first service, namely, the first network function, after receiving the first signaling, the forwarding node forwards the first signaling to the first network function based on the information about the first network function carried in the forwarding logic of the first signaling. If there are a plurality of network functions (processing nodes) for executing the first service, for example, the first network function and the second network function, after receiving the first signaling, the forwarding node forwards the first signaling to the first network function and/or the second network function based on the information about the first network function and the information about the second network function that are carried in the forwarding logic of the first signaling. Optionally, if the forwarding logic of the first signaling carries invoking orders of the first network function and the second network function, for example, an invoking order of the first network function is prior to an invoking order of the second network function, the forwarding node forwards the first signaling to the first network function.

S290: The first network function executes the first service.

In an example, if there is one network function (processing node) for executing the first service, namely, the first network function, after receiving the first signaling, the first network function determines, based on the third configuration information, that the terminal device supports using the first service, and the first network function executes the first service.

In an example, if there are a plurality of network functions (processing nodes) for executing the first service, for example, the first network function and the second network function, after receiving the first signaling, the first network function determines, based on the third configuration information, that the terminal device supports using the first service, and the first network function executes the first part of the first service. Then, the first network function may continue to send the first signaling to the second network function based on the information about the second network function carried in the forwarding logic of the first signaling, so that the second network function may determine, based on the third configuration information, that the terminal device supports using the first service, and the second network function continues to execute the second part of the first service. Optionally, after executing the first part of the first service, the first network function may alternatively continue to send the first signaling to the second network function based on the service request message name and the specific parameter that are carried in the first signaling, or the invoking orders of the first network function and the second network function, and the second network function continues to execute the second part of the first service.

It should be noted that steps S260 to S290 are optional, in other words, an action of requesting, by the terminal device, to obtain the first service from the first network function through the first signaling is optional. In addition, an occasion on which the terminal device requests to obtain the first service through the first signaling is not limited in this application. For example, the terminal device may immediately perform step S260 after obtaining the first configuration information, or may perform step S260 when there is a requirement for obtaining the first service.

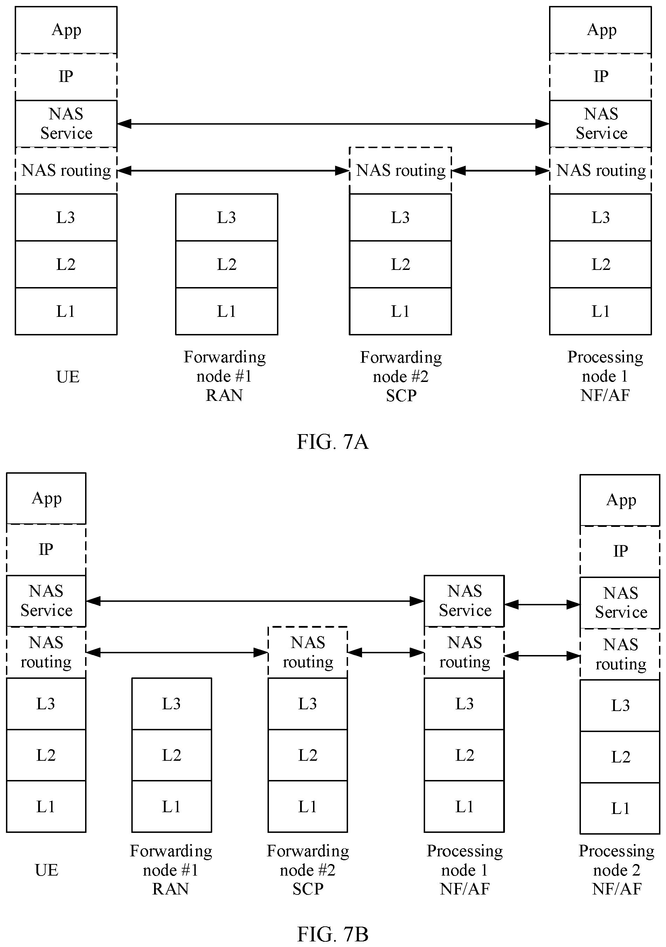

With reference to FIG. 7A and FIG. 7B, the following describes a position of the routing information in a protocol stack and a specific implementation of determining the forwarding logic of the first signaling based on the routing information.

FIG. 7A and FIG. 7B are diagrams of a protocol stack according to an embodiment of this application. As shown in FIG. 7A and FIG. 7B, signaling interaction between UE and a processing node may be forwarded by using a forwarding node. There may be one or more forwarding nodes, and there may also be one or more processing nodes. FIG. 7A shows that there is one processing node (for example, a processing node 1, namely, a first network function) that provides a first service. FIG. 7B shows that there are a plurality of processing nodes (for example, a processing node 1 and a processing node 2, namely, a first network function and a second network function) that provide a first service. For example, for a session establishment service (the first service), the UE sends a session establishment request message to a RAN (for example, a forwarding node #1) through first signaling, and the RAN sends the session establishment request message to an AMF (for example, the processing node 1) through the first signaling. Optionally, the RAN may first forward the first signaling to an SCP (for example, a forwarding node #2), and the SCP sends the session establishment request message to the AMF (for example, the processing node 1). Then, the AMF first verifies the session establishment request message, that is, the AMF continues to forward the first signaling to the SMF (for example, the processing node 2), and then the SMF performs session establishment configuration, that is, a plurality of processing nodes process the first signaling. In this case, after completing processing the first signaling, the processing node 1 may perform subsequent forwarding based on routing information carried at a NAS routing layer (for example, the routing information includes an identifier and/or address information of the processing node), that is, forward the first signaling to the processing node 2. Alternatively, the processing node 1 may forward the processed first signaling to the SCP (for example, the forwarding node #2), and the SCP performs subsequent forwarding based on processing logic of the first signaling, that is, forwards the first signaling to the SMF, and the like.

Optionally, the NAS routing layer is located above L3 of the protocol stack. A specific position of the NAS routing layer is not limited in this application. For example, the NAS routing layer may be located between L3 and a NAS Service layer, or the NAS routing layer may be located below an app layer. The app layer may be used when a NAS Service needs to carry an application layer data packet, for example, when an AF deploys a processing node in a network, or when some data packets may be forwarded to the AF through a signaling plane. Data carried at the app layer herein is data carried in a payload in the NAS Service.

Optionally, there is an IP layer below the app layer. If the data at the app layer needs to be forwarded by the forwarding node to the AF through a DN, or an identity of the UE needs to be identified by using the address information, or path selection needs to be performed by using the address information (for example, selection logic of whether a lower layer invokes the first signaling for transmission or uses a PDU session for transmission may be sent to the UE by using second configuration information), the IP layer may be used. Optionally, the IP layer may alternatively be replaced with another function layer, for example, a function of performing packet splitting processing on the data carried at the app layer, or a selection function of determining whether an app data packet is encapsulated through the first signaling or a user plane session.

A specific implementation in which the NAS routing layer is configured to determine the forwarding logic of the first signaling is described as follows.

In an example, the NAS routing layer may indicate a mapping relationship between a first service type of a terminal device and information about the processing node. For example, the first service type includes an AI service type, a computational power service type, and a sensing service type, and corresponding processing nodes are respectively an NF 1, an NF 2, and an NF 3. In this case, after the forwarding node receives the first signaling from the terminal device, for example, the first signaling is used to request to obtain a sensing service, the forwarding node determines, based on the mapping relationship and the sensing service type, that the corresponding processing node is the NF 3, and the forwarding node forwards the first signaling to the NF 3. Optionally, in this manner, the forwarding logic of the first signaling may be maintained by the forwarding node. Optionally, the mapping relationship may be predefined or preconfigured by the network for the forwarding node, or the mapping relationship may be configured by a network device for the forwarding node through signaling. Optionally, the mapping relationship may exist in a form of table, formula, character, text, or the like. This is not limited in this application.

In another example, the NAS routing layer may carry the routing information. For example, if routing is performed based on an identifier, the routing information includes an ID of the processing node; or if routing is performed based on an address, the routing information includes address information (such as an IP address or a MAC address) of the processing node, and the forwarding node performs routing based on the routing information carried at the NAS routing layer. For the terminal device, if the NAS routing layer exists, the NAS routing layer may carry the routing information; or if the NAS routing layer does not exist, the forwarding node needs to obtain the routing information from the NAS Service layer. For example, the forwarding node may determine a type of the first signaling based on a NAS header at the NAS Service layer, then query an NRF for information about an NF that can process the first signaling, and forward the obtained NF information as routing information. Alternatively, the forwarding node may obtain the routing information from a first network element (or a second network element or an application function) and forward the routing information.

According to the foregoing technical solution, the first network element generates first configuration information, and delivers the first configuration information to the terminal device or another network element, to support the another network element in invoking a service. The network allows flexible definition and service orchestration of network functions. The terminal device may obtain the first service by exchanging the first signaling with the first network function, to provide flexible and lightweight deployment or update of network services, and ensure that the first network function and the first service can be quickly implemented and applied, thereby satisfying a service requirement of a user. In addition, a routing layer between ends (that is, between the terminal device and the first network function) is added, and routing setting is performed for transmission of the first signaling, to ensure that the first signaling can be normally transmitted between the terminal device and the first network function.

FIG. 3 is a schematic flowchart of a communication method 300 according to an embodiment of this application. As shown in FIG. 3, an example in which a first network element is an NACF, a second network element is an OAM/NCF/TCF, and a terminal device is UE is used for description. The method is mainly described for NF deployment or association performed by a network, and includes the following plurality of steps. It should be understood that the method 300 shown in FIG. 3 may be considered as a specific implementation of the method shown in FIG. 2. Related descriptions in the embodiment shown in FIG. 2 are also applicable to this implementation. FIG. 3 and FIG. 2 may have a same or similar technical means. Content described in the embodiment shown in FIG. 2 is not described in detail again in FIG. 3.

S301: The UE reports a capability.

For example, the UE may send capability information to a network side (for example, any one or more of a RAN, an SMF, a PCF, a DB, an NF, an NACF, an OAM, a TCF, or an NCF), and correspondingly, the network side receives the capability information from the UE. For a meaning of the capability information and a manner of reporting the capability information, refer to related descriptions of the method 200.

S302: The network side (for example, the NACF, the OAM, the TCF, or the NCF) completes processing node NF deployment or association.

It should be understood that the NF herein is an NF related to a first service, and may be understood as that the NF supports the first service, or the NF supports invoking the first service. For a meaning of the first service, information about the processing node, and a specific implementation of NF deployment or association, refer to related descriptions of the foregoing method 200.

For example, the OAM/NCF/TCF completes deployment or orchestration of the NF, so that the NF supports the first service. For example, if the first service is a compute service, the OAM/NCF/TCF may send a request message to an NF related to the compute service, to request NF deployment or association. The request message may carry information such as resource information and/or processing logic, to indicate the NF to process first signaling on a corresponding resource based on the processing logic and provide the first service. Correspondingly, the NF sends a response message to the OAM/NCF/TCF, to indicate an execution result of the NF deployment or association, for example, an execution success or an execution failure. It should be understood that this application is performed based on successful NF deployment or association. To be specific, the OAM/NCF/TCF may further request first configuration information from the NACF. Optionally, if the execution fails, the NF may send a cause value to the OAM/NCF/TCF, to indicate that the NF deployment or association fails.

It should be noted that the OAM/NCF/TCF and the NACF may be integrated, or may be deployed independently. Optionally, the NACF may alternatively be integrated with the PCF. This is not limited in this application.

In an implementation, before step S302 is performed, the method further includes step S303. To be specific, an external AF may request NF deployment or association from the network side.

S303: The AF sends a request message to the OAM/NCF/TCF, and correspondingly, the OAM/NCF/TCF receives the request message from the AF.

The request message is used to request NF deployment or association.

S304: The OAM/NCF/TCF sends a response message to the AF, and correspondingly, the AF receives the response message from the OAM/NCF/TCF.

The response message indicates an execution result of the NF deployment or association, for example, an execution success or an execution failure. It should be understood that this application is performed based on successful NF deployment or association. To be specific, the AF may further request to obtain a NAS configuration from the NACF. Optionally, if the execution fails, the OAM/NCF/TCF may send a cause value to the AF, to indicate that the NF deployment or association fails.

In the solution shown in FIG. 3, the network side may flexibly deploy or orchestrate the NF in a network, so that the NF can flexibly and lightly provide the first service for the UE for the terminal device, to satisfy a service requirement of a user.

FIG. 4 is a schematic flowchart of a communication method 400 according to an embodiment of this application. As shown in FIG. 4, an example in which a first network element is an NACF, a second network element is an OAM/NCF/TCF, and a terminal device is UE is used for description. The method mainly describes a case that the first network element generates first configuration information, sends second configuration information to UE in a policy update manner, and sends third configuration information to a processing node NF, and includes the following plurality of steps. It should be understood that the method 400 shown in FIG. 4 may be considered as a specific implementation of the method shown in FIG. 2. Related descriptions in the embodiment shown in FIG. 2 are also applicable to this implementation. FIG. 2 to FIG. 4 may have a same or similar technical means. Content described in the embodiments shown in FIG. 2 and FIG. 3 is not described again in FIG. 4.

S401: The UE reports a capability. For a specific implementation and definitions of related parameters, refer to related descriptions of the foregoing method 200.

S402: The OAM/NCF/TCF sends a request message #1 to the NACF, and correspondingly, the NACF receives the request message #1 from the OAM/NCF/TCF.

S403: An AF sends a request message #2 to the NACF, and correspondingly, the NACF receives the request message #2 from the AF.

The request message #1 or the request message #2 is used to request the first configuration information, and the first configuration information includes the second configuration information and the third configuration information. For specific definitions, refer to related descriptions of the foregoing method 200.

Based on the foregoing step S402 or S403, the NACF may generate the first configuration information based on a request message from an internal or external network element, and deliver the first configuration information.

S404: The NACF sends the first configuration information to a DB, and correspondingly, the DB receives the first configuration information from the NACF.

The DB may be a UDR, a UDM, or an unstructured data storage function (Unstructured Data Storage Function, UDSF).

Optionally, the NACF may alternatively send the third configuration information in the first configuration information to the processing node NF. For parameters included in the third configuration information, definitions of the parameters, and a specific implementation, refer to related descriptions of the foregoing method 200. Alternatively, the NACF may send the first configuration information to the AF/OAM/NCF/TCF, for example, carry the first configuration information in a response message #1 in step S405 or a response message #2 in step S406.

In response to step S402 or S403, the method may further include step S405 or S406.

S405: The NACF sends the response message #1 to the OAM/NCF/TCF, and correspondingly, the OAM/NCF/TCF receives the response message #1 from the NACF.

S406: The NACF sends the response message #2 to the AF, and correspondingly, the AF receives the response message #2 from the NACF.

The response message #1 or the response message #2 indicates a configuration result of the first configuration information, for example, a configuration success or a configuration failure. Optionally, the response message #1 or the response message #2 includes the first configuration information.

It should be understood that the technical solutions of this application are performed when the first configuration information is successfully configured. Optionally, if the first configuration information fails to be configured, the first response message may carry a failure cause value, to indicate that the first configuration information fails to be configured.

It should be noted that either step S402 or step S403 may be performed. Correspondingly, either step S405 or step S406 may be performed. This is not limited in this application.

S407: The OAM/NCF/TCF/AF sends the first configuration information to the DB, and correspondingly, the DB receives the first configuration information from the OAM/NCF/TCF/AF.

It should be noted that either step S404 or step S407 may be performed. This is not limited in this application.

Based on S404 and S407, the DB obtains the first configuration information. Further, the DB may send the second configuration information to the UE, and/or send the third configuration information to the processing node NF.

S408: The DB sends a policy update message #1 to an AMF/PCF, and correspondingly, the AMF/PCF receives the policy update message #1 from the DB.

S409: The AMF/PCF sends a policy update message #2 to the UE, and correspondingly, the UE receives the policy update message #2 from the AMF/PCF.

The policy update message #1 and the policy update message #2 include the second configuration information. Optionally, the policy update message #1 includes the first configuration information.

For example, after the first configuration information is stored in the DB, the DB may notify the NF (for example, the PCF responsible for UE policy control and/or the AMF responsible for UE mobility management) that subscribes to a service update notification. For example, the PCF/AMF may send a subscription request message to the DB in step S401, so that the DB notifies the AMF/PCF when determining that the first configuration information (or the second configuration information) is updated. After receiving updated first configuration information (or second configuration information), the AMF/PCF may send the second configuration information to the UE.

It should be noted that the methods shown in FIG. 3 and FIG. 4 may be implemented independently, or may be implemented in combination. This is not limited in this application. For example, before the NACF generates the first configuration information, the OAM/NCF/TCF in the network completes processing node NF deployment or association.

In the solution shown in FIG. 4, the NACF may generate or obtain the first configuration information based on a request from the external AF or the internal OAM/NCF/TCF, and deliver the first configuration information, including sending the second configuration information to the UE and sending the third configuration information to the processing node NF, so that data related to a first service can be transmitted between the UE and the processing node through first signaling, and the NF can flexibly and lightly provide the first service for the UE for the terminal device, to satisfy a service requirement of a user.

It should be understood that, in FIG. 4, the second configuration information is sent to the terminal device in a policy update manner. The following describes, with reference to FIG. 5, sending the second configuration information to the terminal device through a session.

FIG. 5 is a schematic flowchart of a communication method 500 according to an embodiment of this application. As shown in FIG. 5, an example in which a first network element is an NACF, a second network element is an OAM/NCF/TCF, and a terminal device is UE is used for description. The method mainly describes a case that after obtaining second configuration information, the UE obtains fourth configuration information through a user plane session, to complete software update or chip upgrade, and includes the following plurality of steps. It should be understood that the method 500 shown in FIG. 5 may be considered as a specific implementation of the method shown in FIG. 2. Related descriptions in the embodiment shown in FIG. 2 are also applicable to this implementation. FIG. 2 to FIG. 5 may have a same or similar technical means. Content described in the embodiments shown in FIG. 2 to FIG. 4 is not described again in FIG. 5.

S501: The UE reports a capability. For a specific implementation and definitions of related parameters, refer to related descriptions of the foregoing method 200.

S502: Complete processing node NF deployment, and generate and send first configuration information.

For a specific implementation of NF deployment, refer to related descriptions of the foregoing method 300. For a specific implementation of generating and sending the first configuration information, refer to related descriptions of the foregoing method 400.

S503: The UE obtains a session parameter and/or first node information.

For example, the UE obtains the session parameter and/or the first node information from a network side. For specific definitions of the session parameter and the first node information, refer to related descriptions of the foregoing method 200. It should be understood that the first node information herein is node information used for delivering the second configuration information and/or the fourth configuration information, for example, an NACF/OAM/NCF/TCF/AF. In other words, the UE may request to obtain the second configuration information and/or the fourth configuration information from a first node.

In this implementation, the UE may obtain the second configuration information based on step S502. Further, the UE needs to complete software update or chip upgrade to obtain a first service based on the second configuration information by sending first signaling.

The following describes, with reference to steps S504 to S511, that the UE obtains the fourth configuration information through a first session. The fourth configuration information indicates information for the UE to perform software update or chip upgrade (which may be referred to as software information for short).

In a first example, the UE obtains a session parameter in step S503, where the session parameter is used to establish the first session. In this case, the first session is newly established.

S504: The UE receives indication information.

For example, the network side (for example, the AMF, the NACF, the OAM/NCF/TCF, or the AF) sends the indication information to the UE, to indicate the UE to obtain the fourth configuration information through the first session, that is, download corresponding software from the network side through the session. Optionally, the UE may further receive software information from the network side, for example, a NAS Service ID. Optionally, the software information and the indication information may be sent simultaneously, or may be sent separately. Optionally, the indication information may be delivered together with a policy update message in step S502. This is not limited in this application.

S505: The UE sends a session establishment request message to the SMF, and correspondingly, the SMF receives the session establishment request message from the UE.

The session establishment request message includes the session parameter, and the session establishment request message is used to request to establish the first session. For example, the session parameter includes at least one of the following: a DNN, slice information, a session type, or the like.

S506: The SMF obtains node information. For a specific implementation, refer to related descriptions of the foregoing method 200.

S507: The SMF sends session configuration information to a UPF, and correspondingly, the UPF receives the session configuration information from the SMF.

The session configuration information includes the node information.

S508: The SMF sends a session establishment response message to the UE, and correspondingly, the UE receives the session establishment response message from the SMF.

The session establishment response message indicates that the session is successfully established or fails to be established.

In the following, the UE may obtain the fourth configuration information through the newly established first session, that is, steps S509 to S511 are performed.

S509: The UE sends a request message to the UPF through the first session, and correspondingly, the UPF receives the request message from the UE through the first session. The request message is used to obtain the fourth configuration information.

S510: The UPF obtains the fourth configuration information.

For example, the UPF sends the request message to an associated node based on the node information carried in the session configuration information in step S507, to obtain the fourth configuration information. Correspondingly, after receiving the request message, the associated node feeds back the fourth configuration information to the UPF.

S511: The UPF sends the fourth configuration information to the UE through the first session, and correspondingly, the UE receives the fourth configuration information from the UPF through the session.

In a second example, if the UE obtains the node information in step S503, the UE may obtain the fourth configuration information through the first session. The first session may be an existing general first session, or may be the first session newly established in the foregoing steps S505 to S508. This is not limited in this application.

S509: The UE sends a request message to the UPF through the first session, and correspondingly, the UPF receives the request message from the UE through the first session. The request message is used to obtain the fourth configuration information, and the request message carries the node information obtained in step S503.

S510: The UPF obtains the fourth configuration information.

For example, the UPF sends the request message to an associated node based on the node information carried in the request message or based on the node information carried in the session configuration information sent by the SMF, to obtain the fourth configuration information. Correspondingly, after receiving the request message, the associated node feeds back the fourth configuration information to the UPF.

S511: The UPF sends the fourth configuration information to the UE through the first session, and correspondingly, the UE receives the fourth configuration information from the UPF through the session.

In the solution shown in FIG. 5, the UE may obtain the second configuration information and/or the fourth configuration information through the first session, to complete software update or chip upgrade, and then may request the first service from the processing node through the first signaling, to satisfy a service requirement of a user.

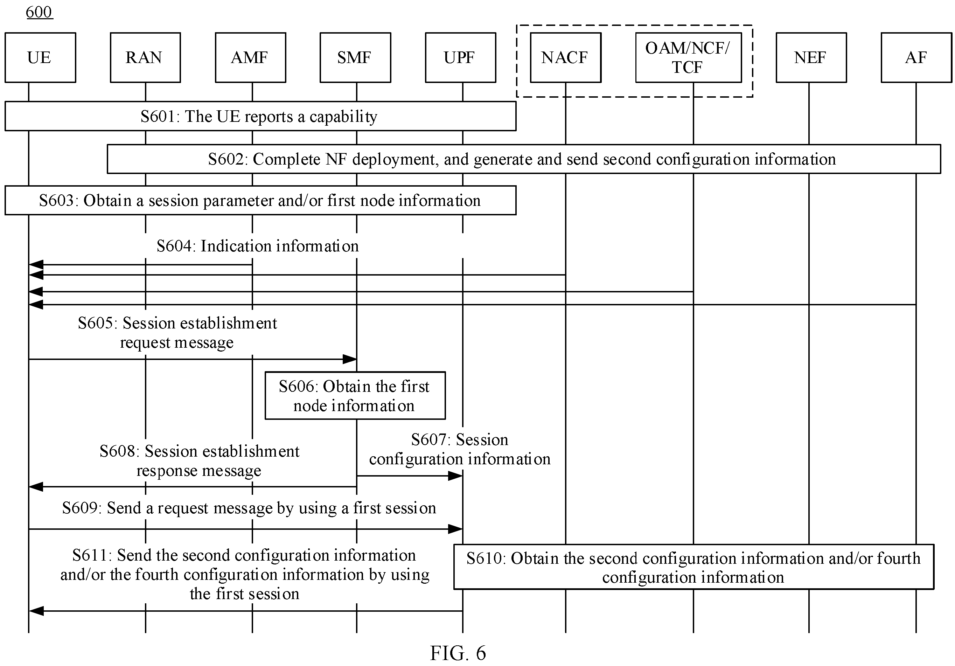

FIG. 6 is a schematic flowchart of a communication method 600 according to an embodiment of this application. As shown in FIG. 6, an example in which a first network element is an NACF, a second network element is an OAM/NCF/TCF, and a terminal device is UE is used for description. Compared with the foregoing method 500, the method mainly describes a case that the UE obtains second configuration information and/or fourth configuration information through a user plane session, and completes software update or chip upgrade, and includes the following plurality of steps. It should be understood that the method 600 shown in FIG. 6 may be considered as a specific implementation of the method shown in FIG. 2. Related descriptions in the embodiment shown in FIG. 2 are also applicable to this implementation. FIG. 2 to FIG. 6 may have a same or similar technical means. Content described in the embodiments shown in FIG. 2 to FIG. 5 is not described again in FIG. 6.

S601: The UE reports a capability. For a specific implementation and definitions of related parameters, refer to related descriptions of the foregoing method 200.

S602: A network side (for example, the NACF, the OAM, the TCF, or the NCF) completes processing node NF deployment, and generates and sends first configuration information.

For a specific implementation of NF deployment, refer to related descriptions of the foregoing method 500. A difference lies in that the UE in this implementation does not obtain the second configuration information. Therefore, the network side indicates the UE to obtain the second configuration information and/or the fourth configuration information through a first session.

S603: The UE obtains a session parameter and/or first node information.

For definitions of the session parameter and/or the first node information, and a specific implementation, refer to related descriptions of the foregoing method 500.

In a possible implementation, the UE needs to complete software update or chip upgrade to obtain a first service based on the second configuration information by sending first signaling. In other words, before obtaining the first service through the first signaling, the UE needs to obtain the fourth configuration information to complete software update or chip upgrade. In other words, the UE obtains the second configuration information and the fourth configuration information through the user plane session. Optionally, an execution order of obtaining the second configuration information and the second configuration information is not limited in this application.

In another possible implementation, the UE does not need to complete software update or chip upgrade to obtain the second configuration information. In other words, after obtaining the second configuration information, the UE may obtain the first service through the first signaling, and does not need to obtain the fourth configuration information. Alternatively, the UE may complete software update or chip upgrade by obtaining the fourth configuration information, and does not need to obtain the second configuration information.

The following describes, with reference to steps S604 to S611, that the UE obtains the second configuration information and/or the fourth configuration information through the first session. The fourth configuration information indicates information for the UE to perform software update or chip upgrade (which may be referred to as software information for short).

In a first example, the UE obtains a session parameter in step S603, where the session parameter is used to establish the first session. In this case, the first session is newly established.

S604: The UE receives indication information.

For example, the network side (for example, the AMF, the NACF, the OAM/NCF/TCF, or the AF) sends the indication information to the UE, to indicate the UE to obtain the second configuration information and/or the fourth configuration information through the first session.

S605: The UE sends a session establishment request message to the SMF, and correspondingly, the SMF receives the session establishment request message from the UE.

The session establishment request message includes the session parameter, and the session establishment request message is used to request to establish the first session. For example, the session parameter includes at least one of the following: a DNN, slice information, a session type, or the like.

S606: The SMF obtains node information. For a specific implementation, refer to related descriptions of the foregoing method 200.

S607: The SMF sends session configuration information to a UPF, and correspondingly, the UPF receives the session configuration information from the SMF.

The session configuration information includes the node information.

S608: The SMF sends a session establishment response message to the UE, and correspondingly, the UE receives the session establishment response message from the SMF.

The session establishment response message indicates that the session is successfully established or fails to be established.

In the following, the UE may obtain the second configuration information and/or the fourth configuration information through the newly established first session, that is, steps S609 to S611 are performed.

S609: The UE sends a request message to the UPF through the first session, and correspondingly, the UPF receives the request message from the UE through the first session. The request message is used to obtain the second configuration information and/or the fourth configuration information.

S610: The UPF obtains the second configuration information and/or the fourth configuration information.

For example, the UPF sends the request message to an associated node based on the node information carried in the session configuration information in step S607, to obtain the second configuration information and/or the fourth configuration information. Correspondingly, after receiving the request message, the associated node feeds back the second configuration information and/or the fourth configuration information to the UPF.

S611: The UPF sends the fourth configuration information to the UE through the first session, and correspondingly, the UE receives the fourth configuration information from the UPF through the session.

In a second example, if the UE obtains the node information in step S603, the UE may obtain the second configuration information and/or the fourth configuration information through the first session. The first session may be an existing general first session, or may be the first session newly established in the foregoing steps S605 to S608. This is not limited in this application.

S609: The UE sends a request message to the UPF through the first session, and correspondingly, the UPF receives the request message from the UE through the first session. The request message is used to obtain the second configuration information and/or the fourth configuration information, and the request message carries the node information obtained in step S603.

S610: The UPF obtains the second configuration information and/or the fourth configuration information.

For example, the UPF sends the request message to an associated node based on the node information carried in the request message or based on the node information carried in the session configuration information sent by the SMF, to obtain the fourth configuration information. Correspondingly, after receiving the request message, the associated node feeds back the second configuration information and/or the fourth configuration information to the UPF.

S611: The UPF sends the second configuration information and/or the fourth configuration information to the UE through the first session, and correspondingly, the UE receives the second configuration information and/or the fourth configuration information from the UPF through the session.

In the solution shown in FIG. 6, the UE may obtain the second configuration information and/or the fourth configuration information through the first session, to complete software update or chip upgrade, and then may request the first service from the processing node through the first signaling, to satisfy a service requirement of a user.

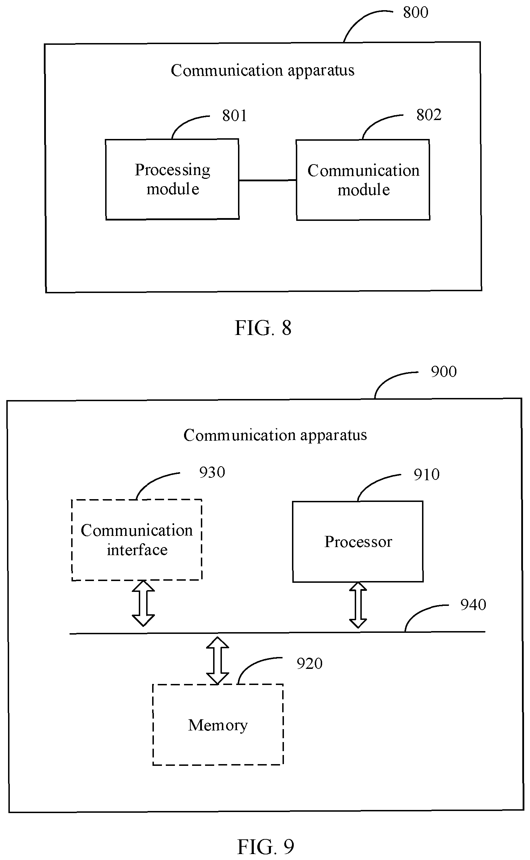

The foregoing describes in detail embodiments on a communication method side of this application with reference to FIG. 1 to FIG. 7A and FIG. 7B. The following describes in detail embodiments on a communication apparatus side of this application with reference to FIG. 8 and FIG. 9. It should be understood that descriptions of the apparatus embodiments correspond to the descriptions of the method embodiments. Therefore, for a part that is not described in detail, refer to the foregoing method embodiments.

FIG. 8 is a diagram of a communication apparatus 800 according to an embodiment of this application. As shown in FIG. 8, the communication apparatus 800 includes a processing module 801 and a communication module 802. The communication apparatus 800 may be a first network element (for example, an NACF), or may be a communication apparatus that is used in a first network element or used with a first network element and that can implement a method performed by the first network element, for example, a chip, a chip system, or a circuit. Alternatively, the communication apparatus 800 may be a second network element (for example, an NCF, a TCF, or an OAM), or may be a communication apparatus that is used in a second network element or used with a second network element and that can implement a method performed by the second network element, for example, a chip, a chip system, or a circuit. Alternatively, the communication apparatus 800 may be a terminal device (for example, UE), or may be a communication apparatus that is used in a terminal device or used with a terminal device and that can implement a method performed by the terminal device, for example, a chip, a chip system, or a circuit. Alternatively, the communication apparatus 800 may be a forwarding node (for example, a RAN, an AMF, or an SCP), or may be a communication apparatus that is used in a forwarding node or used with a forwarding node and that can implement a method performed by the forwarding node, for example, a chip, a chip system, or a circuit.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation of the first network element, the second network element, the forwarding node, or the terminal device in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 800 is used in the first network element, the processing module 801 may be configured to implement a processing function of the first network element in the foregoing embodiments, and the communication module 802 may be configured to implement receiving and sending functions of the first network element in the foregoing embodiments.

When the communication apparatus 800 is used in the second network element, the processing module 801 may be configured to implement a processing function of the second network element in the foregoing embodiments, and the communication module 802 may be configured to implement receiving and sending functions of the second network element in the foregoing embodiments.

When the communication apparatus 800 is used in the forwarding node, the processing module 801 may be configured to implement a processing function of the forwarding node in the foregoing embodiments, and the communication module 802 may be configured to implement receiving and sending functions of the forwarding node in the foregoing embodiments.

When the communication apparatus 800 is used in the terminal device, the processing module 801 may be configured to implement a processing function of the terminal device in the foregoing embodiments, and the communication module 802 may be configured to implement receiving and sending functions of the terminal device in the foregoing embodiments.

In addition, it should be noted that the communication module and/or the processing module may be implemented by using a virtual module. For example, the processing module may be implemented by using a software functional unit or a virtual apparatus, and the communication module may be implemented by using a software function or a virtual apparatus. Alternatively, the processing module or the communication module may be implemented by using a physical apparatus. For example, the apparatus is implemented by using a chip/circuit (for example, an integrated circuit or a logic circuit). The communication module may be an input/output circuit and/or a communication interface, and performs an input operation (corresponding to the foregoing receiving operation) and an output operation (corresponding to the foregoing sending operation). The processing module is an integrated processor, a microprocessor, or a circuit (for example, an integrated circuit or a logic circuit).

In this application, division into the modules is an example, and is merely logical function division. During actual implementation, there may be another division manner. In addition, functional modules in examples of this application may be integrated into one processor, each of the modules may exist alone physically, or two or more modules may be integrated into one module. The integrated module may be implemented in a form of hardware, or may be implemented in a form of software functional module.

FIG. 9 is a diagram of a communication apparatus 900 according to an embodiment of this application. As shown in FIG. 9, optionally, the communication apparatus 900 may be a chip or a chip system. Optionally, in this application, the chip system may include a chip, or may include a chip and another discrete component.

The communication apparatus 900 may be configured to implement a function of any network element (for example, the first network element, the second network element, the forwarding node, or the terminal device) in the communication system described in the foregoing examples. The communication apparatus 900 may include at least one processor 910. Optionally, the processor 910 is coupled to a memory. The memory may be located in the apparatus. Alternatively, the memory may be integrated with the processor. Alternatively, the memory may be located outside the apparatus. For example, the communication apparatus 900 may further include at least one memory 920. The memory 920 stores a necessary computer program, a computer program or instructions, and/or data for implementing any one of the foregoing examples. The processor 910 may execute the computer program stored in the memory 920, to complete the method in any one of the foregoing examples.

The communication apparatus 900 may further include a communication interface 930. The communication apparatus 900 may exchange information with another device through the communication interface 930. For example, the communication interface 930 may be a transceiver, a circuit, a bus, a module, a pin, or another type of communication interface. When the communication apparatus 900 is a chip-type apparatus or circuit, the communication interface 930 in the apparatus 900 may alternatively be an input/output circuit, and may input information (or referred to as receiving information) and output information (or referred to as sending information). The processor 910 is an integrated processor, a microprocessor, an integrated circuit, a logic circuit, or the like. The processor may determine output information based on input information.

The coupling in this application may be an indirect coupling or a communication connection between apparatuses, units, or modules in an electrical form, a mechanical form, or another form, and is used for information exchange between the apparatuses, the units, or the modules. The processor 910 may operate cooperatively with the memory 920 and the communication interface 930. A specific connection medium between the processor 910, the memory 920, and the communication interface 930 is not limited in this application.

Optionally, as shown in FIG. 9, the processor 910, the memory 920, and the communication interface 930 are connected to each other through a bus 940. Optionally, the bus may include a type of bus like an address bus, a data bus, or a control bus. In addition, for ease of representation, FIG. 9 shows one bus 940, but this does not mean that there is only one bus or only one type of bus.

It should be understood that the processor mentioned in this embodiment of this application may be the following device or a part of circuits configured for a processing function in the following device: a central processing unit (central processing unit, CPU) or another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes a plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that the memory described in this specification is intended to include, but is not limited to, these and any other appropriate type of memory.

An embodiment of this application further provides a computer-readable storage medium. The computer-readable storage medium stores computer instructions for implementing a method performed by the first network element, the second network element, the forwarding node, or the terminal device in the foregoing method embodiments.

An embodiment of this application further provides a computer program product, including instructions. When the instructions are executed by a computer, the method performed by the first network element, the second network element, the forwarding node, or the terminal device in the foregoing method embodiments is implemented.

An embodiment of this application further provides a communication system. The communication system includes the first network element, the second network element, and the forwarding node in the foregoing embodiments. Optionally, the communication system further includes a terminal device.

For explanations and beneficial effects of related content of any one of the apparatuses provided above, refer to the corresponding method embodiments provided above. Details are not described herein again.

For ease of understanding of embodiments provided in this application, the following descriptions are provided.
(1) In this application, unless otherwise stated or there is a logic conflict, terms and/or descriptions in different embodiments are consistent and may be mutually referenced, and technical features in different embodiments may be combined based on an internal logical relationship thereof, to form a new embodiment.
(2) In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In text descriptions of this application, the character "/" generally indicates an "or" relationship between associated objects. "At least one of the following items (pieces)" or a similar expression thereof means any combination of these items, including any combination of singular items (pieces) or plural items (pieces). For example, at least one of a, b, and c may indicate a, b, c, a and b, a and c, b and c, or a, b, and c. Each of a, b, and c may be in a singular form or a plural form.
(3) In this application, "first", "second", and various numbers (for example, #1 and #2) are merely used for distinguishing for ease of description, and are not intended to limit the scope of embodiments of this application, for example, are used to distinguish between different messages but not to describe a specific order or sequence. It should be understood that objects described in such a way are interchangeable in an appropriate circumstance, so that a solution other than embodiments of this application can be described.
(4) In this application, descriptions such as "when...", "in a case of...", and "if" all mean that a device performs corresponding processing in an objective case but are not intended to limit time, and the device is not required to perform a determining action during implementation. This does not mean that there is another limitation.
(5) In this application, "indicating" may include directly indicating and indirectly indicating. When a piece of indication information indicates A, the indication information may directly indicate A or indirectly indicate A, but this does not mean that the indication information necessarily carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of these pieces of sub-information may be the same or may be different. This application does not limit, for example, a sending method.

The "indication information" in embodiments of this application may be an explicit indication, to be specific, a direct indication through signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

(6) In this application, a "protocol" may be a standard protocol in the communication field, for example, may include a 5G protocol, an NR protocol, and a related protocol used in a future communication system. This is not limited in this application. "Predefinition" may include definition in advance, for example, protocol definition. "Preconfiguration" may be implemented by pre-storing corresponding code or a corresponding table in a device, or may be implemented in another manner that may be used to indicate related information. An implementation thereof is not limited in this application.

(7) In this application, "communication" may also be described as "data transmission", "information transmission", "data processing", or the like. "Transmission" includes "sending" and "receiving".

Serial numbers of the foregoing processes do not mean execution orders in various embodiments of this application. The execution orders of the processes should be determined based on functions and internal logic of the processes, and should not be construed as any limitation on the implementation processes of embodiments of this application.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, the part contributing to the conventional technology, or a part of the technical solutions may be implemented in a form of software product. The computer software product is stored in a storage medium, and includes several instructions for enabling a computer device (which may be a personal computer, a server, a network device, or the like) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining first configuration information, wherein the first configuration information indicates a use rule of first signaling between a terminal device and a first network function, the first signaling is associated with a first service, and the first network function supports providing the first service for the terminal device; and
sending the first configuration information.

2. The method according to claim 1, wherein the first signaling is used to implement one or more of the following:
controlling the first service;
synchronizing a status of the first service; or
transmitting data of the first service.

3. The method according to claim 1 or 2, wherein the method further comprises:
receiving a first request message, wherein the first request message is used to request the first configuration information, and the first request message comprises information about the first network function and/or information about the first service; and
sending a first response message, wherein the first response message indicates a configuration result of the first configuration information; and/or
sending the first configuration information comprises:
sending the first response message, wherein the first response message comprises the first configuration information.

4. The method according to any one of claims 1 to 3, wherein sending the first configuration information comprises:
sending second information to a database, wherein the second information is used to store or update the first configuration information.

5. The method according to claim 3 or 4, wherein the first request message further comprises one or more of the following:
an identifier of the terminal device;
a format of the first signaling;
an identifier of the first signaling;
a service identifier associated with the first signaling;
a service type associated with the first signaling;
content of the first signaling;
forwarding logic of the first signaling;
a priority of the first signaling; or
information about a service requester allowed to use the first signaling and/or information about an application allowed to use the first signaling.

6. The method according to any one of claims 1 to 5, wherein before obtaining the first configuration information, the method further comprises:
determining, based on first information, that the terminal device supports using the first service, wherein
the first information comprises one or more of the following:
capability information of the terminal device, wherein the capability information of the terminal device indicates that the terminal device supports the first service, and/or indicates that the terminal device supports obtaining the first service through the first signaling;
the identifier of the terminal device, wherein the identifier of the terminal device is associated with capability information of the terminal device;
subscription information of the terminal device, wherein the subscription information indicates that a network authorizes the terminal device to use the first service, and/or indicates that the network authorizes the terminal device to obtain the first service through the first signaling; or
policy information, wherein the policy information indicates that the terminal device is allowed to use the first service, and/or indicates that the terminal device is allowed to obtain the first service through the first signaling.

7. The method according to any one of claims 1 to 6, wherein the first configuration information comprises second configuration information and third configuration information, and sending the first configuration information comprises:
sending the second configuration information to the terminal device; and/or
sending the third configuration information to the first network function.

8. The method according to claim 7, wherein the second configuration information comprises one or more of the following:
the format of the first signaling;
the content of the first signaling;
a priority of the first service;
the identifier of the first signaling;
a name of the first signaling; or
another parameter associated with the first service.

9. The method according to claim 7 or 8, wherein the third configuration information comprises one or more of the following:
an identifier of the first service;
the identifier of the first signaling;
information about an application allowed to use the first service and/or information about a service requester allowed to use the first service;
the forwarding logic of the first signaling; or
network information, wherein the terminal device is allowed to use the first service in a network indicated by the network information.

10. The method according to any one of claims 7 to 9, wherein the method further comprises:
sending indication information to the terminal device, wherein the indication information indicates the terminal device to obtain the second configuration information and/or fourth configuration information through a first session, and the fourth configuration information indicates information for the terminal device to perform software update.

11. The method according to any one of claims 7 to 10, wherein sending the second configuration information to the terminal device comprises:
sending policy update information to the terminal device, wherein the policy update information comprises the second configuration information; or
receiving a second request message from a user plane network element, wherein the second request message is used to request to obtain the second configuration information; and
sending a second response message to the user plane network element, wherein the second response message comprises the second configuration information.

12. The method according to any one of claims 7 to 11, wherein the method further comprises:
receiving a third request message from the user plane network element, wherein the third request message is used to request to obtain the fourth configuration information; and
sending a third response message to the user plane network element, wherein the third response message comprises the fourth configuration information.

13. The method according to any one of claims 1 to 12, wherein the first signaling comprises NAS signaling and/or control plane signaling.

14. A communication method, comprising:
sending a first request message, wherein the first request message is used to request first configuration information, the first request message comprises information about a first network function and/or information about a first service, the first configuration information indicates a use rule of first signaling between a terminal device and the first network function, the first signaling is associated with the first service, and the first network function supports providing the first service for the terminal device; and
receiving a first response message, wherein the first response message indicates a configuration result of the first configuration information; and/or the first response message comprises the first configuration information.

15. The method according to claim 14, wherein before sending the first request message, the method further comprises:
deploying the first network function in a network.

16. The method according to claim 15, wherein deploying the first network function in the network comprises:
receiving a fourth request message, wherein the fourth request message is used by an application function or an operator management function to request to deploy the first network function in the network; and
sending a fourth response message, wherein the fourth response message indicates a deployment result of the first network function.

17. The method according to any one of claims 14 to 16, wherein the first response message comprises the first configuration information, and the method further comprises:
sending third information to a database, wherein the third information is used to store or update the first configuration information.

18. The method according to any one of claims 14 to 17, wherein the first configuration information comprises second configuration information and third configuration information, and the method further comprises:
sending the second configuration information to the terminal device; and/or
sending the third configuration information to the first network function.

19. The method according to claim 18, wherein the method further comprises:
sending indication information to the terminal device, wherein the indication information indicates the terminal device to obtain the second configuration information and/or fourth configuration information through a first session, and the fourth configuration information indicates information for the terminal device to perform software update.

20. A communication method, comprising:
receiving second configuration information, wherein the second configuration information indicates a use rule of first signaling between a terminal device and a first network function, the first signaling is associated with a first service, and the first network function supports providing the first service for the terminal device; and
sending the first signaling based on the second configuration information, wherein the first signaling is used by the terminal device to obtain the first service.

21. The method according to claim 20, wherein before receiving the second configuration information, the method further comprises:
sending capability information, wherein the capability information indicates that the terminal device supports obtaining the first service through the first signaling based on the second configuration information.

22. The method according to claim 21, wherein the capability information further indicates that the terminal device supports exposing the first signaling to a first application for use.

23. The method according to any one of claims 20 to 22, wherein the method further comprises:
receiving indication information, wherein the indication information indicates the terminal device to obtain the second configuration information and/or fourth configuration information through a first session, and the second configuration information indicates information for the terminal device to perform software update.

24. The method according to claim 23, wherein the method further comprises:
obtaining a session parameter, wherein the session parameter is used to establish the first session;
sending a session establishment request message based on the session parameter, wherein the session establishment request message is used to request to establish the first session; and
receiving a session establishment response message, wherein the session establishment response message indicates an establishment result of the first session.

25. The method according to claim 23 or 24, wherein receiving the second configuration information comprises:
sending a fifth request message to a user plane network element through the first session, wherein the fifth request message is used to request to obtain the second configuration information and/or the fourth configuration information; and
receiving a fifth response message from the user plane network element through the first session, wherein the fifth response message comprises the second configuration information and/or the fourth configuration information.

26. The method according to claim 23, wherein the method further comprises:
obtaining first node information, wherein the first node information indicates a sending node of the second configuration information;
sending a sixth request message to a user plane network element through the first session, wherein the sixth request message is used to request to obtain the second configuration information and/or the fourth configuration information, and the sixth request message comprises the first node information; and
receiving a sixth response message from the user plane network element through the first session, wherein the sixth response message comprises the second configuration information and/or the fourth configuration information.

27. The method according to claim 26, wherein the sixth request message further comprises information about the first service.

28. The method according to any one of claims 20 to 27, wherein receiving the second configuration information comprises:
receiving policy update information, wherein the policy update information comprises the second configuration information.

29. A communication method, comprising:
receiving first signaling, wherein the first signaling is used by a terminal device to obtain a first service;
obtaining forwarding logic of the first signaling, wherein the forwarding logic of the first signaling comprises information about a first network function, and the first network function supports processing the first signaling; and
sending the first signaling to the first network function based on the forwarding logic of the first signaling.

30. The method according to claim 29, wherein obtaining the forwarding logic of the first signaling comprises:
receiving the forwarding logic of the first signaling from a first network element, wherein the first network element supports the first service.

31. The method according to claim 29 or 30, wherein obtaining the forwarding logic of the first signaling comprises:
sending a query message to a network repository function, wherein the query message is used to obtain information about the first network function.

32. A communication apparatus, comprising one or more functional modules, wherein the one or more functional modules are configured to perform the method according to any one of claims 1 to 13, or the one or more functional modules are configured to perform the method according to any one of claims 14 to 19, or the one or more functional modules are configured to perform the method according to any one of claims 20 to 28, or the one or more functional modules are configured to perform the method according to any one of claims 29 to 31.

33. A communication apparatus, comprising a processor, wherein the processor is coupled to a memory, and the processor is configured to execute a computer program stored in the memory, so that the apparatus performs the method according to any one of claims 1 to 13, or the apparatus performs the method according to any one of claims 14 to 19, or the apparatus performs the method according to any one of claims 20 to 28, or the apparatus performs the method according to any one of claims 29 to 31.

34. A computer-readable storage medium, storing a computer program, wherein when the computer program is run on a computer, the method according to any one of claims 1 to 13 is performed, or the method according to any one of claims 14 to 19 is performed, or the method according to any one of claims 20 to 28 is performed, or the method according to any one of claims 29 to 31 is performed.

35. A computer program product, comprising instructions, wherein when the instructions are run, the method according to any one of claims 1 to 13 is performed, or the method according to any one of claims 14 to 19 is performed, or the method according to any one of claims 20 to 28 is performed, or the method according to any one of claims 29 to 31 is performed.
